Europäisches Patentamt

European Patent Office

Office européen des brevets

(19)

(11) EP 0 801 758 B1

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(21) Anmeldenummer: **94918736.3**

(22) Anmeldetag: **15.06.1994**

(51) Int Cl.$^6$: **G02B 17/06**, G02B 23/06

(86) Internationale Anmeldenummer:
**PCT/DE94/00728**

(87) Internationale Veröffentlichungsnummer:
**WO 95/34840 (21.12.1995 Gazette 1995/54)**

(54) **UNIVERSELLER ZWEISPIEGELKORREKTOR FÜR CASSEGRAINARTIGE SPIEGELSYSTEME**

UNIVERSAL TWO-MIRROR CORRECTOR FOR CASSEGRAIN-TYPE MIRROR SYSTEMS

CORRECTEUR UNIVERSEL A DEUX MIROIRS POUR SYSTEMES DE MIROIRS DE CASSEGRAIN

(84) Benannte Vertragsstaaten:
**DE FR GB IT**

(43) Veröffentlichungstag der Anmeldung:
**22.10.1997 Patentblatt 1997/43**

(73) Patentinhaber: **Gallert, Frank**
**12526 Berlin (DE)**

(72) Erfinder: **Gallert, Frank**
**12526 Berlin (DE)**

(56) Entgegenhaltungen:
SU-A- 425 155     SU-A- 579 592
SU-A- 593 173     US-A- 3 674 334

- OPTICAL ENGINEERING, Bd.32, Nr.3, März 1993, BELLINGHAM US Seiten 536 - 541, XP356207 J.T.KIM, H.J.KONG, S.S.LEE 'improved four mirror optical system for deep-ultraviolet submirometer lithography'
- OPTICAL ENGINEERING, Bd.28, Nr.9, September 1989, BELLINGHAM US Seiten 1014 - 1018, XP65065 S.Y.RAH, S.S.LEE 'four-spherical-mirror zoom telescope continuously satisfying the aplanatic condition'
- OPTICAL ENGINEERING, Bd.26, Nr.12, Dezember 1987, BELLINGHAM US Seiten 1197 - 1199 J.M.SASIAN 'flat-field, anastigmatic, four-mirror optical system for large telescopes'

**Beschreibung**

Die Erfindung betrifft ein Spiegelsystem der im Oberbegriff der Ansprüche 1 bis 3 genannten Art. Gegenstand der Erfindung ist somit ein Spiegelsystem mit vier Spiegeln.

Das eindungsgemäße Spiegelsystem kann insbesondere als Teleskopsystem für die astronomische - und Weltraumforschung, wie die Erdfernerkundung eingesetzt werden.

Das erfindungsgemäße Spiegelsystem mit vier Spiegeln besteht aus einem Zweispiegelsystem in Cassegrainkonfiguration und einem zugeordneten Zweispiegelkorrektor.

Zweispiegelsysteme des Cassegraintyps sind bereits seit langem bekannt. Diese bekannten Zweispiegelsysteme umfassen einen sammelnden Hauptspiegel und einen kleineren, zerstreuenden Hilfsspiegel. Einfallendes Parallellicht, das auf den sammelnden Hauptspiegel auftrifft wird konvergent auf den zerstreuenden Hilfsspiegel reflektiert. Dieser reflektiert das Licht mit verringerter Konvergenz in eine Bildebene, in der ein Detektor angeordnet ist.

Beim sogenannten klassischen Cassegrainsystem ist der sammelnde Hauptspiegel parabolisch ausgebildet, während der zerstreuende Hilfsspiegel hyperbolisch ausgebildet ist. Die hyperbolische Formgebung des zerstreuenden Hilfsspiegels ist dabei so gewählt, daß die sphärische Aberration im Cassegrainsystem beseitigt ist. Das klassische Gassegrainsystem weist Koma, Astigmatismus, Bildfeldkrümmung und Verzeichnung auf.

Eine Weiterentwicklung der Cassegrainsysteme wurde 1922 von Ritchey und Chretien gegeben. Bei diesem sogenannten Ritchey-Chretien-System sind sowohl der sammelnde Hauptspiegel als auch der zerstreuende Hilfsspiegel hyperbolisch ausgebildet. Die hyperbolische Formgebung beider Spiegel ist dabei so aufeinander abgestimmt, daß die sphärische Aberration und die Koma in 3. Ordnung beseitigt sind Das Ritchey-Chretien-System weist Astigmatismus, Bildfeldwölbung und Verzeichnung auf. Im Vergleich zum äquivalenten klassischen Cassegrainsystem ist das Bildfeld im Ritchey-Chretien-System noch stärker gewölbt.

Der Erfindung liegt die Aufgabe zugrunde die genannten Abbildungsfehler dieser bekannten Zweispiegelsysteme zu beseitigen. Sie geht aus von dem Patent US 3,674,334, das ein afokales, aplanatisches und anastigmatisches 3-Spiegelsystem beschreibt. Eine weitere Aufgabe der Erfindung ist es bezüglich des klassischen Cassegrainsystems einen Zweispiegelkorrektor so anzugeben, daß verschiedene Gesamtbrennweiten im resultierenden Spiegelsystem mit vier Spiegeln realisiert werden. Eine andere Aufgabe der Erfindung ist es in einer Ausprägung des erfindungsgemäßen Gegenstandes den Zweispiegelkorrektor zu einem Spektrographen dergestalt zu erweitern, daß sowohl in Ortsrichtung wie in Dispersionsrichtung beugungsbegrenzte Auflösung für das übertragbare Objektfeld und den Spektralbereich erzielt wird Ferner sollte eine definierte, reelle Austrittspupille im Spiegelsystem erzeugt werden, in der kostengünstig den Lichtfluß beeinflussende Elemente angeordnet werden können ohne die Qualität der optischen Abbildung negativ zu beeinflussen.

Es wurden Spiegelsysteme mit 4 Spiegeln geschaffen, bei denen einfallendes Parallellicht auf einen ersten, sammelnden Spiegel 1, der den Hauptspiegel des Cassegrainartigen Spiegelsystems bildet, auftrifft und von diesem auf einen kleineren, zweiten, zerstreuenden Spiegel 2 reflektiert wird, der den Hilfsspiegel des Cassegrainartigen Spiegelsystems bildet, von wo aus das Licht in die Ebene des Zwischenbildes 5 reflektiert wird, die zusammenfällt mit der Lage der Bildebene des Cassegrainartigen Spiegelsystems, von wo aus das Licht auf einen dritten, sammelnden Spiegel 3 gelangt, der das Licht auf den vierten, sammelnden Spiegel 4 reflektiert, der das Licht in die Ebene des Bildfeldes 6 reflektiert, in der ein Detektor 7 einbringbar ist. Hierbei ist der Abstand des dritten, sammelnden Spiegels 3 von der Ebene des Zwischenbildes 5 so gewählt, daß nach vollzogener Reflexion am dritten, sammelnden Spiegel 3 substantiell Bündel parallelen Lichtes entstehen. Das heißt der Abstand des dritten, sammelnden Spiegels 3 von der Ebene des Zwischenbildes 5 ist substantiell gleich seiner paraxialen Brennweite, was gleichbedeutend ist mit der Hälfte des Betrages seines axialen Krümmungsradius. Der dritte, sammelnde Spiegel 3 wirkt somit als Kollimator. Da nun Bündel parallelen Lichtes auf den vierten, sammelnden Spiegel 4 auftreffen, entsteht das Bildfeld 6 in einem Abstand vom vierten, sammelnden Spiegel 4, die dessen paraxialer Brennweite entspricht, oder was das Gleiche ist - der Abstand vom Vertex des vierten, sammelnden Spiegels 4 zum paraxialen Bildfeld 6 ist die Hälfte des Betrages des axialen Krümmungsradius des vierten, sammelnden Spiegels 4. In Zusammenhang mit dieser prinzipiellen Anordnung der Spiegel 1 bis 4 wird die Aufgabe der Korrektion der Abbildungsfehler Cassegrainartiger Spiegelsysteme durch die geeignete Formgebung der sammelnden Spiegel 3 und 4 und durch den geeigneten Abstand der sammelnden Spiegel 3 und 4 gemäß den Kennzeichen der Ansprüche 1 bis 3 gelöst.

Gemäß Anspruch 1 bei dem der erste, sammelnde Spiegel 1 parabolisch und der zweite, zerstreuende Spiegel 2 hyperbolisch ausgebildet ist, wobei beide Spiegel 1 und 2 ein klassisches Cassegrainsystem bilden, wird der dritte, sammelnde Spiegel 3 hyperbolisch und der vierte, sammelnde Spiegel 4 spharisch ausgebildet. Der Krümmungsmittelpunkt dieses vierten, sammelnden Spiegels 4 befindet sich dabei substantiell auf dem Vertex des dritten, sammelnden Spiegels 3. Die hyperbolische Formgebung des dritten, sammelnden Spiegels 3 ist dabei so bestimmt, daß dieser Spiegel 3 eine sphärische Aberration in Form einer sphärischen Überkorrektion einführt, die die sphärische Aberration des nachfolgenden vierten, sammelnden nun sphärischen Spiegels 4 der sphärische Ünterkorrektion aufweist, kompensiert.

Werden in der Reihenfolge des Lichteinfalls der axiale Krummungsradius des ersten, sammelnden Spiegels 1 mit Raxial(1), der axiale Krümmungsradius des zweiten, zerstreuenden Spiegels 2 mit Raxial(2), der axiale Krummungsradius des dritten, sammelnden Spiegels 3 mit Raxial(3) und der axiale Krümmungsradius des vierten, sammelnden Spiegels 4 mit Raxial(4) bezeichnet, so ergeben sich folgende Beziehungen für die Schwarzschildkonstanten der Spiegel:

$$k1 = -1 \qquad [1]$$

$$k2 = - [(m1 + 1)/ (m1 - 1)]^2 \qquad [2]$$

$$k3 = -1 - |Raxial(3) /Raxial(4)|^3 \qquad [3]$$

$$k4 = 0 \qquad [4]$$

wobei

  k1 die Schwarzschildkonstante des ersten, sammelnden Spiegels 1;
  k2 die Schwarzschildkonstante des zweiten, zerstreuenden Spiegels 2;
  k3 die Schwarzschildkonstante des dritten, sammelnden Spiegels 3

und

  k4 die Schwarzschildkonstante des vierten, sammelnden Spiegels 4

bezeichnet, wobei m1 der Brennweitenverlängerungsfaktor ist, den der zweite, zerstreuende Spiegel gegenüber der paraxialen Brennweite des ersten, sammelnden Spiegels 1 bewirkt, wobei sich dieser ergibt mit:

$$m1 = ro1 /(ro1 - k(1)), \qquad [5]$$

wobei ro1 der Betrag des Verhältnis des axialen Krümmungsradius des zweiten, zerstreuenden Spiegels 2 zum axialen Krümmungsradius des ersten, sammelnden Spiegels 1 ist, der somit gegeben ist durch:

$$ro1 = |Raxial(2) / Raxial(1)|, \qquad [6]$$

wobei k(1) die relative paraxiale Auftreffhöhe auf den zweiten, zerstreuenden Spiegel 2 bezüglich eines parallel zur optischen Achse auf den ersten, sammelnden Spiegel 1 auftreffenden Parallelbündels ist und sich ergibt mit:

$$k(1) = 1 - 2 * a2/|Raxial(1)|, \qquad [7]$$

wobei a2 der Betrag des Abstandes zwischen dem Vertex des ersten, sammelnden Spiegels 1 und dem Vertex des zweiten, zerstreuenden Spiegels 2 ist,
wobei die Schwarzschildkonstanten der Spiegel 1, 2, 3 und 4 definiert sind als das negative des Quadrates der Exzentrizität des zugehörigen Kegelschnittes, wobei allgemein gilt:

$$k_i = -e_i^2 \qquad [8]$$

wobei ki die i-te Schwarzschildkonstante und ei die i-te Exzentrizität ist.
Die Beträge der Abstände der Spiegel 2,3 und 3,4 sind gegeben mit:

$$a3 = s2' + |Raxial(3)|/2 \qquad [9]$$

$$a4 = |Raxial(4)|, \qquad [10]$$

wobei s2' der Abstand der Ebene des Zwischenbildes 5 vom Vertex des zweiten, zerstreuenden Spiegels 2 ist und sich ergibt mit:

$$s2'=m1 * k(1) * |Raxial(1)|/2, \qquad [11]$$

wobei a2, m1 und k(1) die oben definierten Größen sind und wobei a3 den Betrag des Abstandes des Vertex des dritten, sammelnden Spiegels 3 vom Vertex des zweiten, zerstreuenden Spiegels 2 kennzeichnet und wobei a4 den Betrag des Abstandes des Vertex des vierten, sammelnden Spiegels 4 vom Vertex des dritten, sammelnden Spiegels 3 kennzeichnet.

Die letzte Schnittweite s4' des Spiegelsystems aus den Spiegeln 1, 2, 3 und 4 ergibt sich mit:

$$s4'= |Raxial(4)|/2, \qquad [12]$$

wobei diese letzte Schnittweite s4' den Abstand des Scheitels des Bildfeldes 6 bezüglich des Gauß'schen Fokus vom Vertex des vierten, sammelnden Spiegels 4 kennzeichnet.

Das solcherart geschaffene Spiegelsystem mit vier Spiegeln, das aus einem klassischen Cassegrainsystem, das aus dem ersten, sammelnden Spiegel 1 und dem zweiten, zerstreuenden Spiegel 2 gebildet wird, und einem Zweispiegelkorrektor, der aus dem dritten, sammelnden Spiegel 3 und dem vierten, sammelnden Spiegel 4 gebildet wird, besteht, ist nun in 3. Ordnung frei von sphärischer Aberration, Koma und Astigmatismus. Zur Minimierung von Fehlern 5 und höherer Ordnung sind gemäß Anspruch 8 Abwandlungen dieser Basiskonfiguration möglich. Dabei dienen asphärische Terme höherer Ordnung, wie Abweichungen von den gegebenen Schwarzschildkonstanten und Abständen dazu die Bildqualität weiter zu verbessern.

Hierdurch wird insbesondere die Koma 5. Ordnung und die sogenannte schiefe oder auch versteckte Sphäre, die einen Mischfehler 5. Ordnung darstellt, minimiert.

Da im Allgemeinen ein eindungsgemäßes Spiegelsystem vorteilhafter Weise dadurch realisiert wird, daß zu einem existierenden klassischen Cassegrainsystem der erfindungsgemäße Zweispiegelkorrektor ergänzt wird, bieten sich vorgenannte Maßnahmen vor allen für die Sammelspiegel 3 und 4 und deren gegenseitigen Abstand an, was den Vorteil hat, daß am schon existierenden klassischen Cassegrainsystem keine Änderungen vorgenommen werden.

Für den Fall, daß gemäß Anspruch 2 der erste, sammelnde Spiegel 1 und der zweite, zerstreuende Spiegel zusammen ein sogenanntes Ritchey-Chretien-System bilden ergeben sich folgende Schwarzschildkonstanten der vier Spiegel 1, 2, 3 und 4

$$k1 = -1 - 2 * k(1) / (1 - k(1)) * [(ro1 - k(1))/ro1]^2 \qquad [13]$$

$$k2 = - [(2 * ro1 - k(1))/k(1)]^2$$

$$- [2 * ro1 * (ro1 - k(1))^2] / [k(1)^3 * (1-k(1))] \qquad [14]$$

$$k3 = -1 \qquad [15]$$

$$k4 = -1 , \qquad [16]$$

wobei

k1 die Schwarzschildkonstante des ersten, sammelnden Spiegels 1

k2 die Schwarzschildkonstante des zweiten, zerstreuenden Spiegels 2
k3 die Schwarzschildkonstante des dritten, sammelnden Spiegels 3

und

k4 die Schwarzschildkonstante des vierten, sammelnden Spiegels 4

ist, wobei ro1 und k(1) die oben definierten Größen sind.

Die Ausdrücke für k1 und k2 sind hierbei nichts weiter als die Schwarzschildkonstanten des Ritchey-Chretien-Systems, die aus der Theorie des aplanatischen Zweispiegelsystems folgen. Beide Spiegel 1 und 2 sind hyperbolisch. Die beiden sammelnden Spiegel 3 und 4 sind substantiell parabolisch ausgebildet. Der Term substantiell parabolisch bezieht sich darauf, daß diese Spiegel zur Korrektion von Bildfehlern 5 und höherer Ordnung gemäß Anspruch 8 auch abweichend gestaltet werden können. Vermeidet man beispielsweise asphärische Terme höherer Ordnung, so kann einer der Spiegel 3 oder 4 elliptisch und der andere Spiegel hyperbolisch ausgeprägt werden, wobei eine Verbesserung der Bildqualität in Abhängigkeit von der Öffnungszahl möglich wird, wobei aber die Schwarzschildkonstanten beider Spiegel 3 und 4 stets sehr nahe bei -1, also der parabolischen Formgebung bleiben. Der Ausdruck substantiell parabolisch ist also nicht als Einschränkung auf die rein parabolische Formgebung zu verstehen, da dieser ohnehin nur einen infinitesimal kleinen Grenzfall zwischen unendlich vielen elliptischen und hyperbolischen Formgebungen darstellt.

Mit zusätzlich aufgebrachten asphärischen Termen höherer Ordnung in der Gestaltung der Spiegeloberflächen gemäß Anspruch 8 läßt sich die Korrektur der abbildungsfehler noch etwas verfeinern. Etwa ab Öffnungszahlen kleiner 6 des Spiegelsystems mit vier Spiegeln ergibt sich eine merkliche Verbesserung, das heißt macht der erhöhte Aufwand in der Formgebung einen Sinn. Für die Abstände der Spiegel 2 und 3 gilt folgende Beziehung:

$$a3 = s2' + |\text{Raxial}(3)| / 2 , \qquad [17]$$

also dieselbe wie im Fall, daß die Spiegel 1 und 2 ein klassischen Cassegrainsystem bilden. Der Abstand der beiden Sammelspiegel 3 und 4, also der Abstand a4 wird nun so eingestellt, daß Koma und Astigmatismus zu Null werden.

Simultan muß aber folgende Beziehung substantiell erfüllt sein:

$$1 = |\text{Raxial}(3)|/|\text{Raxial}(4)|, \qquad [18]$$

d.h. die axialen Krümmungsradien der Sammelspiegel 3 und 4 müssen substantiell übereinstimmen. Natürlich ist auch hier eine feine Abweichung von dieser Bedingung im Bereich einiger Prozent möglich, um möglichst gut Abbildungsfehler 5. und höherer Ordnung zu minimieren. Die Ermittlung des Abstandes beider Sammelspiegel 3 und 4 voneinander geschieht einfach dadurch, daß ein erfindungsgemäßes Spiegelsystem mit vier Spiegeln angesetzt wird, wobei mit Hilfe einer auf Rechner implementierten Seideltheorie beobachtet wird, wann Koma und Astigmatismus simultan zu Null werden, bei Variation des Abstandes beider Spiegel 3 und 4. Es sind nur einige wenige Iterationen nötig um diesen Abstand zu ermitteln. In einer weiteren Computeroptimierung wird dieser Abstand wie auch die Schwarzschildkonstanten der Spiegel 3 und 4 wieder freigegeben, um möglichst günstig die abbildungsfehler 5 und höherer Ordnung zu optimieren. Für einen schnellen Raytracer ist das Sekundensache.

Insgesamt ergibt sich ein Spiegelsystem mit vier Spiegeln 1, 2, 3 und 4 das zumindestens in 3 Ordnung von sphärischer Aberration, Koma und Astigmatismus zu befreien ist.

Neben diesen zwei dargestellten Varianten des erfindungsgemäßen Spiegelsystems gemäß Anspruch 1 bzw. 2 ist nun noch eine dritte Variante gemäß Anspruch 3 möglich.

Dabei bilden der erste, sammelnde Spiegel 1 und der zweite, zerstreuende Spiegel 2 ein Spiegelsystem des Cassegraintyps, bei dem die Schwarzschildkonstante des zweiten zerstreuenden Spiegels 2 gleich derjenigen im äquivalenten klassischen Cassegrainsystem ist. Der erste, sammelnde Spiegel 1 wird hyperbolisch ausgeführt. Der dritte, sammelnde Spiegel 3 wird substantiell parabolisch ausgebildet während der vierte, sammelnde Spiegel 4 substantiell spharisch ausgebildet wird. Dabei liegt sein Krümmungsmittelpunkt auf dem Schnittpunkt von optischer Achse und der reellen Austrittspupille des afokalen Teilsystems, das aus den Spiegeln 1, 2 und 3 gebildet wird. Die hyperbolische Ausbildung des ersten sammelnden Spiegels 1 wird dabei so gestaltet, daß diese eine sphärische Aberration erzeugt, die die sphärische Aberration des nun sphärischen vierten, sammelnden Spiegels 4 kompensiert Die Lage dieses vierten, sammelnden Spiegels 4 relativ zur reellen Austrittspupille des afokalen Teilsystems aus den Spiegeln 1, 2 und 3 ist dabei etwa analog derjenigen, die der sphärische Spiegel in einer konventionellen Schmidtkamera einnimmt. Wenn man so will simulieren die drei Spiegel 1,2 und 3 eine mit sphärischer Aberration behaftete Eintrittspupille im Krümmungsmittelpunkt des nun sphärischen vierten, sammelnden Spiegels - wobei diese sphärische Aberration die des nachfolgenden nun sphärischen vierten, sammelnden Spiegels 4 so kompensiert wie die Schmidtplatte im Krümmungsmittelpunkt des sphärischen Spiegels einer Schmidtkamera. Darüberhinaus dient das afokale Teilsystem, das aus den Spiegeln 1, 2 und 3 gebildet wird, zur Bündeleinschnürung und Baulängenbegrenzung in Relation zu einer Schmidtkamera gleicher freier Öffnung.

Die Schwarzschildkonstanten der Spiegel 1, 2 3 und 4 ergeben sich mit:

$$k1 = -1 - 1/ [v * mges^3] \qquad [19]$$

$$k2 = - [(m1 + 1) /(m1 - 1]^2 \qquad [20]$$

$$k3 = -1 \qquad [21]$$

$$k4 = 0, \qquad [22]$$

wobei auf die Große mges, die den Gesamtbrennweitenverlängerungsfaktor und die Große v, die die Vergrößerung des afokalen Teilsystems aus den Spiegeln 1,2 und 3 kennzeichnet, noch eingegangen wird. Der Abstand der Spiegel und 3 folgt mit:

$$a3 = s2' + IRaxial(3)I/2 , \qquad [23]$$

Der Abstand a4 ist so bestimmt, daß der vierte, sammelnde Spiegel 4 konzentrisch zum Schnittpunkt von optischer Achse und reeller Austrittspupille, die das afokale Teilsystem aus den Spiegeln 1, 2 und 3 bildet, liegt. Die Schwarzschildkonstante k1 des ersten, sammelnden Spiegels 1 ist so bestimmt, daß die sphärische Aberration im Spiegelsystem aus den vier Spiegeln 1, 2, 3 und 4 zu Null wird. Der erste, sammelnde Spiegel 1 weist nun generell hyperbolische Formgebung auf.

Es liegt auf der Hand, daß ein solches Spiegelsystem gemäß Anspruch 3 durch ein Plangitter 11 zu einem Spektrographen erweitert werden kann. Ein optionaler Spalt 12 wird in der Ebene des Zwischenbildes 5 angeordnet. Das Plangitter 11 wird nun vorzugsweise in der Ebene der reellen Austrittspupille des afokalen Teilsystems, das aus den Spiegeln 1,2 und 3 gebildet wird, angeordnet. Ein Plangitter bewirkt selbst keine Abbildungsfehler. Dennoch kann man es nicht beliebig anordnen, da es eine Richtungsänderung der auffallenden Strahlung in allen von Null verschiedenen Ordnungen bewirkt. Diese Richtungsänderung induziert auf nachfolgenden optischen Flächen eines auskorrigierten optischen Systems neue, vorher nicht vorhandene Aberrationen. Nur dann wenn die nachfolgenden Flächen sphärisch sind und konzentrisch zum Schnittpunkt von optischer Achse und Plangitter 11 liegen, kann man den Einfluß des Plangitters 11 auf den nachfolgenden Strahlengang eliminieren. Dieser Fall ist in dieser enfindungsgemäßen Anordnung aber exakt gegeben. Der hier parabolische Sammelspiegel 3 wirkt als Kollimator genauso wie der Kollimator in einem gewöhnlichen Spektrographen. In diesem wird dann zumeist als Kameraoptik eine Schmidtkamera eingesetzt. Da nun aber die optimale Lage der Korrektionsplatte im Krümmungsmittelpunkt des Kugelspiegels ist, müßte eigentlich in einer solche Anordnung die Schmidtplatte räumlich mit dem Plangitter 11 zusammenfallen. Da dies schlecht realisierbar ist, wird ein Abstand zwischen Aperturstop und Korrektionsplatte eingeführt. Die dadurch induzierten zusätzlichen Abbildungsfehler lassen sich nur in gewissen Grenzen durch Abänderung des ursprünglichen Designs wieder reduzieren.

Im erfindungsgemäßen System existiert dieses Problem nicht, da die Funktion der Korrektionsplatte durch die mit sphärischer Aberration behaftete reelle Austrittspupille übernommen wird. Prinzipiell ist eine spektrographische Abbildung möglich, die beschränkt auf eine Dimension dasselbe örtliche Auflösungsvermögen bietet wie das auskorrigierte 4-Spiegelsystem. Beugungsbegrenzte Auflösung sowohl in Ortsrichtung wie in Dispersionsrichtung ist bei hoher Lichtstärke möglich. Die Limitierung ist nur gegeben durch die auftretenden Bildfehler des Zwischenbildes 5 und die damit gegebene untere Grenze der Breite des Spaltes 12.

Ist das ursprungliche 4-Spiegelsystem so ausgeprägt daß es ein ebenes Bildfeld aufweist, so weist es nach Einbringung eines Plangitters 11 in die Ebene der reellen Austrittspupille in Ortsrichtung ebenfalls ein ebenes Bildfeld auf. In Dispersionsrichtung hingegen ist das Bildfeld gekrümmt und liegt konzentrisch zum Krummungsmittelpunkt des Kugelspiegels. das heißt damit konzentrisch zum Schnittpunkt von optischer Achse und reeller Austrittspupille beziehungsweise Plangitter 11. Das rührt daher, daß die vom Gitter abgebeugten Parallelbündel verschiedener Wellenlänge so auf den Kugelspiegel auftreffen wie Parallelbundel verschiedener Ortsrichtung in einer gewöhnlichen Schmidtkamera. Insgesamt bildet sich nun das ortsaufgelöste Spektrum auf einer Zylinderfläche ab, deren Krummungsradius in Dispersionsrichtung liegt und gleich dem Betrag des halben Krümmungsradius des Kugelspiegels 4 ist.

Für den Fall, daß das 4-Spiegelsystem aus konstruktiven Gründen so ausgebildet ist, daß es für sich allein genommen kein ebenes Bildfeld 6 aufweist, wird nach Einbringen des Plangitters 11 in die reelle Austrittspupille das Bildfeld 6 allgemein eine toroidische Fläche.

Im Nachfolgenden sollen einige weitere Beziehungen gegeben werden, die für alle drei Varianten des erfindungsgemäßen Spiegelsystems mit vier Spiegeln 1, 2, 3 und 4 gelten.

Unter der Voraussetzung, daß der paraxiale Brennpunkt des Cassegrainartigen Zweispiegelsystems, das aus dem ersten, sammelnden Spiegel 1 und dem zweiten, zerstreuenden Spiegel 2 gebildet wird, zusammenfällt mit dem paraxialen Brennpunkt des dritten, sammelnden Spiegels 3, ergibt sich der Betrag der Gesamtbrennweite des Spiegelsystems aus den vier Spiegeln 1, 2, 3 und 4 mit:

$$Fges = mges * |Raxial(1)|/2, \qquad [24]$$

wobei der Gesamtbrennweitenverlängerungsfaktor mges sich ergibt mit:

$$mges = m1 * m2, \qquad [25]$$

wobei m2 der Brennweitenverlängerungsfaktor ist, der durch das Zusammenwirken der sammelnden Spiegel 3 und 4 bewirkt wird und sich errechnet mit:

$$m2 = |Raxial(4)/Raxial(3)| . \qquad [26]$$

Bezeichnet D1 den Durchmesser des ersten, sammelnden Spiegels 1, so ergibt sich die Öffnungszahl N1 des Sammelspiegels 1 zu:

$$N1 = 2 * D1 / |Raxial(1)| . \qquad [27]$$

Die Öffnungszahl Ncass des Cassegrainartigen Spiegelsystems aus den Spiegeln 1 und 2 ergibt sich mit:

$$Ncass = m1 * N1 . \qquad [28]$$

Schließlich ergibt sich die Öffnungszahl Nges des gesamten Spiegelsystems aus den Spiegeln 1, 2, 3 und 4 mit:

$$Nges = Ncass * m2 = Fges / D1 . \qquad [29]$$

Die relative paraxiale Auftreffhöhe k(2) auf den dritten, sammelnden Spiegel 3 ergibt sich mit:

$$k(2) = - k(1) * |Raxial(3)| / (2 * s2'), \qquad [30]$$

wobei k(1), Raxial(1) und s2' die oben definierten Größen sind.

Für die relative Auftreffhöhe auf den vierten, sammelnden Spiegel 4 gilt im paraxialen Raum:

$$k(3) = k(2) \qquad [31]$$

Für Gebiete außerhalb des paraxialen Raumes gilt diese Beziehung in sehr guter Näherung und wird nur bei Auftreten von sphärischer Aberration nach der Reflexion am dritten, sammelnden Spiegel 3 etwas modifiziert. Bilden zum Beispiel der erste, sammelnde Spiegel 1 und der zweite, zerstreuende Spiegel 2 ein klassisches Cassegrainsystem mit entsprechend bestimmten Schwarzschildkonstanten beider Spiegel 1 und und ist der dritte, sammelnde Spiegel 3 parabolisch ausgebildet, so gilt Gleichung [30] exakt für alle Auftreffhöhen eines parallel zur optischen Achse auf den ersten, sammelnden Spiegel 1 einfallenden Bündel parallelen Lichtes Die Vergrößerung v des afokalen Spiegelsystems, das aus den Spiegeln 1,2 und 3 gebildet wird, bestimmt sich dem Betrage nach mit:

$$v = 1 \,/|k(3)| = m1 * |Raxial(1) \,/ Raxial(3)| . \tag{32}$$

Die Vergrößerung kennzeichnet hierbei im Wesentlichen zwei Größen. Zum Einen die Bündeleinschnürung, die für parallel zur optischen Achse auf den ersten, sammelnden Spiegel 1 auftreffendes paralleles Licht erreicht wird. Zum Anderen kennzeichnet die Vergrößerung das paraxiale Verhältnis des Tangens des Winkels, den der Hauptstrahl eines austretenden Parallellichtbündels in der reellen Austrittspupille des afokalen Teilsystems aus den ersten drei Spiegeln 1, 2 und 3 bildet, zum Tangens des zugehörigen, geneigt gegen die optische Achse auf den ersten, sammelnden Spiegel 1 einfallenden Parallellichtbündels Zusätzlich kennzeichnet die Vergrößerung v das Verhältnis des Durchmessers der Eintrittspupille D1, die ohne Einschränkung der allgemeinheit auf dem Spiegel 1 angenommen werden kann zum Durchmesser der reellen Austrittspupille Dap, die vom afokalen Teilsystem aus den Spiegeln 1, 2 und 3 erzeugt wird. Somit gilt :

$$Dap = D1 \,/ v. \tag{33}$$

Mit Hilfe der so definierten Vergrößerung des afokalen Teilsystems, das aus den ersten drei Spiegeln 1, 2 und 3 gebildet wird, ergibt sich die Gesamtbrennweite des erfindungsgemäßen Spiegelsystems aus den vier Spiegeln 1, 2, 3 und 4 auch mit:

$$Fges = v * |Raxial(4)| \,/ 2 . \tag{34}$$

Gemäß Anspruch 4 wird im erfindungsgemäßen Spiegelsystem mit vier Spiegeln 1, 2, 3 und 4 die Petzvalsumme zu Null, wenn folgende Beziehung für das Verhältnis der axialen Krümmungsradien der vier Spiegel 1, 2, 3 und 4 gilt:

$$0 = 1 \,/ |Raxial(1)| - 1 \,/ |Raxial(2)| + 1 \,/ |Raxial(3)| + 1 \,/ |Raxial(4)|, \tag{35}$$

wobei

Raxial(1) der axiale Krummungsradius des ersten, sammelnden Spiegels (1);
Raxial(2) der axiale Krümmungsradius des zweiten, zerstreuenden Spiegels (2);
Raxial(3) der axiale Krummungsradius des dritten, sammelnden Spiegels (3);

und

Raxial(4) der axiale Krümmungsradius des vierten, sammelnden Spiegels (4) ist.

Dabei ist der zweite, zerstreuende Spiegel 2 stets konvex gegen das einfallende Licht.
Da in allen drei Varianten des erfindungsgemäßen Spiegelsystems mit vier Spiegeln 1, 2, 3 und 4 der Astigmatismus beseitigt ist, ergibt sich durch die Nullstellung der Petzvalsumme ein vollkommen ebenes Bildfeld 6. Damit ist also auch die Bildfeldwölbung im erfindungsgemäßen Spiegelsystem mit vier Spiegeln 1, 2,3 und 4 beseitigt.
Die Faltung des Spiegelsystems aus den vier Spiegeln 1, 2, 3 und 4 durch zusätzliche Planspiegel 8 gemäß Anspruch 5 bietet kaum Probleme. Ein vorzugsweise in die Ebene des Zwischenbildes 5 eingebrachter Planspiegel 8 bietet jedoch die günstigste Geometrie. Es kann nun je nach Abstand der Ebene des Zwischenbildes 5 vom Vertex des zweiten, zerstreuenden Spiegels 2 notwendig sein eine zentrale Bohrung 10 im ersten, sammelnden Spiegel 1 vorzusehen, um vom zweiten, zerstreuenden Spiegel 2 kommendes Licht passieren zu lassen.
Gemäß Anspruch 6 können verschiedene Kombinationen von Spiegeln 3 und 4 in den Strahlengang eingebracht werden. Dadurch ist zusätzlich zur Korrektion der Abbildungsfehler auch die Schaffung unterschiedlicher Gesamtbrennweiten in der ersten Variante des erfindungsgemäßen Spiegelsystems mit vier Spiegeln 1, 2, 3 und 4 möglich. Hierzu wird vorzugsweise ein Planspiegel 8 in die Ebene des Zwischenbildes 5 eingebracht und um 45 Grad gegen die optische Achse geneigt. Nach vollzogener Reflexion am Planspiegel 8 schließt die optische Achse mit ihrer bisherigen Richtung einen Winkel von 90 Grad ein. Der Planspiegel 8 wird um die optische Achse drehbar ausgeführt. In einer Ebene, die normal zur ursprünglichen optischen Achse steht, sind nun verschiedene Kombinationen von Spiegeln 3 und 4 ausführbar, die sich durch das Verhältnis des axialen Krummungsradius des dritten, sammelnden Spiegel 3 zum axialen Krümmungsradius des vierten, sammelnden Spiegel 4 unterscheiden.

Wegen Gleichung [24], [25],[26] erhält man nun verschiedene mögliche Gesamtbrennweiten. Dazu muß nun nur der Planspiegel 8 um die ursprüngliche optische Achse gedreht werden, um das Licht auf den jeweiligen dritten, sammelnden Spiegel 3 zu reflektieren.

Selbstverständlich kann auch der Planspiegel 8 feststehend gestaltet werden und statt dessen die Kombinationen von Spiegeln 3 und 4 drehbar um die optische Achse angeordnet werden Beispielsweise kann ein eindungsgemäßes System ausgebildet werden wo eine Kombination von Spiegeln 3 und 4 gleichen Krümmungsradius aufweist, wodurch die Brennweite des Cassegrainsystems aus den Spiegeln 1 und 2 reproduziert wird; eine andere Kombination wo sich die Krümmungsradien des 3, und 4, Spiegels wie 1:3 verhalten, wodurch die Brennweite des Gesamtsystems die des Cassegrainsystems dem Betrage nach um den Faktor 3 übertrifft und eine weitere Kombination von Spiegeln 3 und 4 bei der sich die axialen Krümmungsradien dieser Spiegel verhalten wie 2:1, wodurch sich für das Spiegelsystem aus den Spiegeln 1, 2, 3 und 4 die Brennweite auf die betragsmäßige Hälfte der des Cassegrainsystems aus den Spiegeln 1 und 2 reduziert. In diesem Beispiel ergäbe sich somit ein um den Faktor 6 variabler Brennweitenbereich. Führt man in diesem Beispiel die Öffnungszahl des Cassegrainsystems aus den Spiegeln 1 und 2 zum Beispiel zu Ncass = 6 aus, so ergäben sich nun die 3 möglichen Öffnungszahlen Nges = 3; Nges = 6; Nges = 18. Es ist damit einsichtig, daß diese Ausprävung des erfindungsgemäßen Spiegelsystems ein diskontinuierliches Zoom realisiert, wobei bei allen Brennweiten das Spiegelsystem aus den Spiegeln 1,2 und den jeweiligen Spiegeln 3 und 4 frei ist von sphärischer Aberration, Koma und Astigmatismus. In gewissen Grenzen kann sogar für verschiedene Gesamtbrennweiten die Petzvalsumme auf Null gebracht werden, wodurch sich in Abwesenheit von Astigmatismus jeweils ein ebenes Bildfeld 6 ergibt.

Gemäß Anspruch 7 kann eine Bildfeldebnungslinse 9 in den Strahlengang eingebracht werden. Das ist insbesondere in den Fällen nutzlich, in denen aus mechanischen Gründen die Ausbildung der Radien der Spiegel 1 ,2 , 3 und 4 die Nullstellung der Petzlvalsumme nicht erlaubt. Gemäß Anspruch 7 ergibt sich folgende Beziehung um die Petzvalsumme des Spiegelsystems mit vier Spiegeln 1, 2, 3 und 4 mit Hilfe einer Bildfeldebnungslinse 9 auf Null zu bringen:

$$(n - 1)/n*(1/Rel1 - 1/Rel2) = 2*[1/|Raxial(1)|$$

$$- 1/|Raxial(2)| + 1/|Raxial(3)| + 1/|Raxial(4)|] \qquad [36]$$

Hierbei ist n die Brechzahl der Bildfeldebnungslinse 9. Rel1 ist der dem einfallenden Licht und damit dem vierten, sammelnden Spiegel 4 zugewandte Radius der Bildfeldebnungslinse 9, während Rel2 ihr dem Bildfeld 6 zugewandter Radius ist.

Um die durch die Bildfeldebnungslinse 9 eingeführten Aberrationen klein zu halten ist diese vorzugsweise kurz vor dem Bildfeld 6 anzuordnen. Die Mittendicke der Bildfeldebnungslinse 9 sollte möglichst klein gehalten werden. Mit einer geeigneten Durchbiegung der Bildfeldebnungslinse 9, das heißt mit dem Verhältnis ihrer Krümmungsradien, lassen sich die durch sie eingeführten Aberrationen minimieren. Vorzugsweise sollte Glas geringer Dispersion, also Glas mit hoher Abbezahl verwendet werden. Die Flächen der Bildfeldebnungslinse 9 müssen nicht sphärisch ausgeführt werden sondern können naturlich auch asphärisch gestaltet werden, was gegebenenfalls zu einer weiteren Verringerung der Abbildungsfehler führt. Für den Spezialfall, daß der Radius der Bildfeldebnungslinse 9, der dem Bildfeld 6 beziehungsweise dem Detektor 7 zugewandt ist, als Planfläche ausgeführt wird, ergibt sich der verbleibende Radius Rel1 mit:

$$Rel1 = (n - 1)/n*1/\{(2*[1/|Raxial(1)|$$

$$- 1/|Raxial(2)| + 1/|Raxial(3)| + 1/|Raxial(4)|]\} \qquad [37]$$

wobei n die Brechzahl der Bildfeldebnungslinse 9 bei der Designwellenlänge und Raxial(i) den axialen Krummungsradius des i-ten Spiegels des Spiegelsystems mit den Spiegeln 1, 2, 3 und 4 bezeichnet. Es versteht sich daß die Bildfeldebnungslinse 9 gegebenenfalls auch aus mehreren verschiedenen Gläsern und Einzellinsen aufgebaut werden kann. Diese Möglichkeit gehört in den Bereich des Anspruchs 7.

Erfindungsgemäße Spiegelsysteme mit vier Spiegeln 1 ,2 ,3 und 4 sind im Stande eine beugungsbegrenzte Abbildung für einen Objektfelddurchmesser von 0,8 Grad bei einer Öffnungszahl von Nges=6 für ein Spiegelteleskop der 2,5 Meter-Klasse zu liefern. Das heißt die geometrischen Zerstreuungsscheibchen bleiben auf dem dem Objektfeld von 0,8 Grad Durchmesser zugeordneten Bildfeld unter 0,1 Bogensekunden. Dabei ist es möglich diese Abbildung auf einem vollkommen ebenen Bildfeld 6 zu realisieren. Dagegen weist zum Beispiel ein klassisches Cassegrainsystem der gleichen Öffnungszahl und Konfiguration bei gleichem Durchmesser des Objektfeldes eine Zerstreuungsfigur von 9 Bogensekunden Durchmesser auf wobei diese nur auf dem optimal angepaßten, stark gekrümmten mittleren Bildfeld erhalten wird.

Für ein Ritchey-Chretien-System gleicher Öffnungszahl und Konfiguration ergeben sich für ein Objektfeld von 0,8 Grad Durchmesser, Zerstreuungsfiguren von 3 Bogensekunden am Rand des Objektfeldes. Das optimal angepaßte mittlere Bildfeld ist hier etwas stärker gekrümmt als beim äquivalenten klassischen Cassegrainsystem.

Der technische Fortschritt, der durch das erfindungsgemäße Spiegelsystem beziehungsweise den erfindungsgemäßen Zweispiegelkorrektor für Cassegrainartige Zweispiegelsysteme erreicht wird, ist damit offensichtlich. Dabei ist von besonderer Bedeutung, daß nicht komplette Spiegelsysteme mit vier Spiegeln neu geschaffen werden müssen, sondern der Zweispiegelkorrektor kann zu schon bestehenden Teleskopen des klassischen Cassegraintyps und auch des Ritchey-Chretien-Typs ergänzt werden, was beträchtlich die Kosten reduziert. Die erzielbare Verbesserung der Abbildungsqualität steht an vorderster Stelle der zu nennenden Vorteile. Ein weiterer wichtiger Vorteil ist die Möglichkeit gemäß Anspruch 6 mehrere Korrektorsysteme in einer revolverartigen Konfiguration anzuordnen und so unterschiedliche Gesamtbrennweiten und Öffnungszahlen bereitzustellen. Diese Möglichkeit dürfte insbesondere für Weltraumgestützte Beobachtungssysteme interssant sein. Es läßt sich einer hoher Dynamikbereich der erzielbaren Brennweiten erreichen. Ein Faktor von 20 für den Bereich der Brennweiten ist kein Problem. Zwischen diesen einzelnen Brennweiten läßt sich durch den drehbar gelagerten Planspiegel 8 schnell umschalten Ein technisch ausgereiftes Einrastsystem sorgt dafür, daß der Planspiegel 8 schnell und zuverlässig in der gewunschten Richtung positioniert werden kann. Für ein Teleskop der 2,5 Meter-Klasse dürfte eine Bildwechselgeschwindigkeit von 1 Sekunde oder darunter machbar sein.

Das sinnvoll übertragbare Objektfeld, daß vorwiegend aus geometrischen Grunden begrenzt ist, ergibt sich etwa mit:

$$\text{Objektfeld} = 6 \text{ Grad} /[\text{Maximum}(N_{ges}, N_{cass})] , \hspace{2cm} [38]$$

wobei Ncass die Öffnungszahl des Cassegrain- beziehungsweise Ritchey-Chretien-Systems ist. Ist also beispielsweise in einer Konfiguration Nges kleiner als Ncass, so begrenzt Ncass das sinnvoll übertragbare Objektfeld. Ist in einer anderen Konfiguration Nges größer als Ncass, so begrenzt Nges das sinnvoll abbildbare Objektfeld.

Abschließend soll noch eine bemerkenswerte Variante des erfindungsgemäßen Spiegelsystems dargestellt werden.

Führt man für den Spiegel 2, der normalerweise zerstreuend ausgebildet ist, den "Grenzübergang" IRaxlal (2)I gegen unendlich aus, so wird der Spiegel 2 zum gewöhnlichen Planspiegel ohne asphärische Deformation. Nun kann man, da dieser Planspiegel außer einer Faltung des Lichtweges nichts weiter bewirkt, diesen Planspiegel auch weglassen. Man erhält somit ein Spiegelsystem mit drei sammelnden Spiegeln. Aus der ersten Variante des erfindungsgemäßen Spiegelsystems die ein klassisches Cassegrainsystem und den zugeordneten Korrektor beinhaltete, wird nun ein Spiegelsystem mit drei Sammelspiegeln, das einen sammelnden Parabolspiegel 1 und die beiden zugeordneten Spiegel des Zweispiegelkorrektors beinhaltet. Dabei ist der erste Spiegel des Korrektors wieder hyperbolisch mit einer Schwarzschildkonstante nach Gleichung [2] und der zweite Spiegel des Korrektors ist wegen Gleichung [4] sphärisch. Dabei liegt der Krümmungsmittelpunkt dieses zweiten Korrektorpiegels wieder auf dem Vertex des ersten Korrektorspiegels, der als Kollimator arbeitet. Damit ist ein einfacher Korrektor für einen Parabolspiegel ebenfalls Inhalt der Erfindung, da dieser als Spezialfall aus dem klassischen Cassegrainsystem folgt, bei dem der Zerstreuungsspiegel den Radius unendlich annimmt. Natürlich ist jetzt das Bildfeld 6 recht stark gekrümmt, da nur drei sammelnde Spiegel an der Abbildung teilhaben. Mit einer Bildfeldebnungslinse 9 nach Anspruch 7 läßt sich das Bildfeld 6 aber wieder ebnen. Gleichung [36] gilt natürlich auch für diesen Spezialfall.

Ebenso läßt sich die dritte Variante des erfindungsgemäßen Spiegelsystems abwandeln. Es entsteht ein Spiegelsystem mit drei sammelnden Spiegeln, bei dem der erste Spiegel ein sammelnder Hyperboloid, der zweite Spiegel, der als Kollimator wirkt, ein Paraboloid und der letztendlich abbildende dritte Sammelspiegel ein Kugelspiegel ist. Wieder gleicht die durch die hyperbolische Formgebung des ersten Sammelspiegels eingeführte Überkorrektion der sphärischen Aberration die sphärische Unterkorrektion des sammelnden sphärischen Spiegels aus. Selbstverständlich liegt nun wieder der Krümmungsmittelpunkt des sphärischen Sammelspiegels auf dem Schnittpunkt von optischer Achse und der reellen Austrittspupille, die die ersten beiden Sammelspiegel, die als afokales System arbeiten, erzeugen. Natürlich ist auch hier das Bildfeld 6 recht stark gekrümmt welches wiederum gemäß Anspruch 7 mit einer Bildfeldebnungslinse 9 geebnet werden kann. Es ist evident, daß diese Varianten des erfindungsgemäßen Systems nur Spezialfälle darstellen und damit in den Anspruch des Schutzbereiches fallen. Die Erfindung soll nachstehend an mehreren Ausführungsbeispielen erläutert werden. In den dazugehörigen Zeichnungen zeigen:

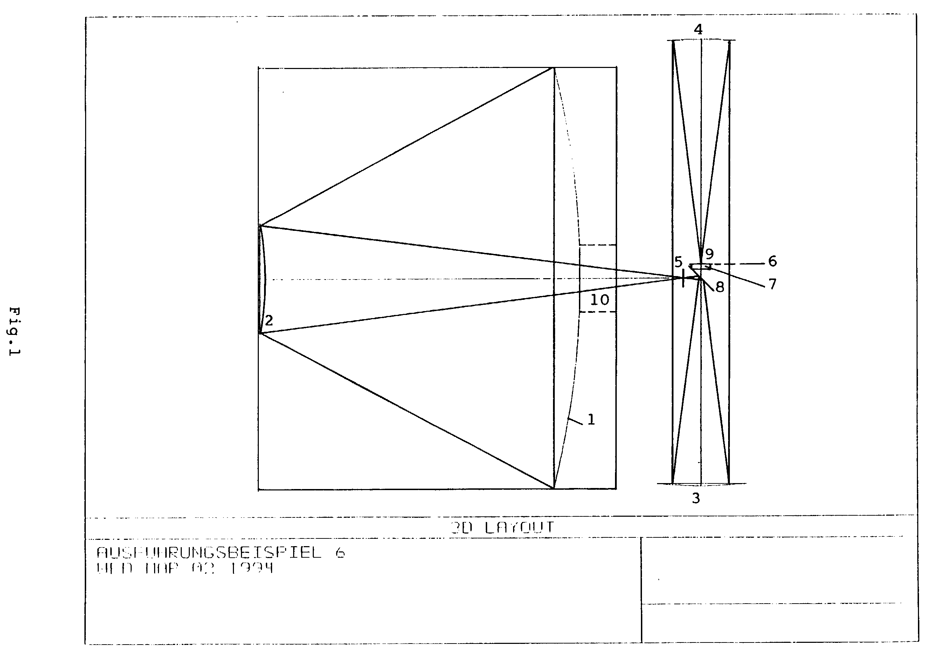

Fig. 1 - die Anordnung der Elemente des erfindungsgemäßen Spiegelsystems

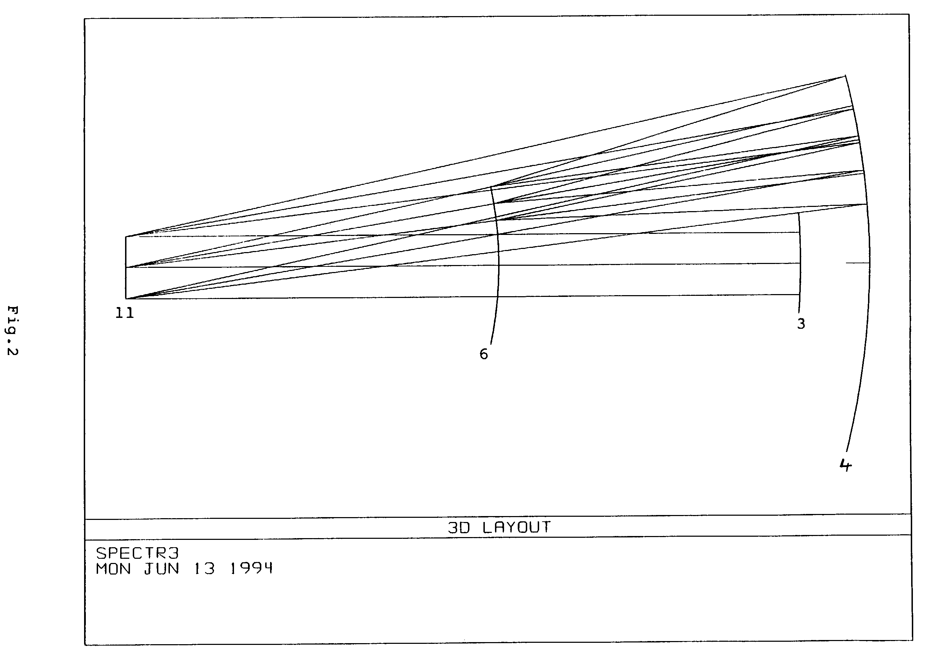

Fig. 2 - die Anordnung des Spektrographen mit den Elementen Kollimatorspiegel 3; Plangitter 11; abbildender Kugelspiegel 4 und Bildfeld 6, der Kugelspiegel 4 und das Bildfeld 6 werden nur so weit ausgebildet, wie sie beleuchtet werden, das Plangitter 11 befindet sich in der reellen Austrittspupille des afokalen Teilsystems aus den Spiegeln 1,2 und 3 Auf den Kollimatorspiegel 3 trifft divergentes Licht, das vom Zwischenbild 8 ausgeht in dessen Ebene der Spalt 12 angeordnet ist.

Fig. 3 - ein Spotdiagramm für Ausführungsbeispiel 1 und Objektfelddurchmesser von 0; 0,4 und 0,8 Grad

Fig. 4 - die Wellenfrontaberration für Ausführungsbeispiel 1 für ein Objektfeld von 0,8 Grad

Fig. 5 - ein Spotdiagramm für Ausführungsbeispiel 2 und Objektfelddurchmesser von 0; 0,2; 0,4; 0,6 und 0,8 Grad

Fig. 6 - die Wellenfrontaberration für Ausfürungsbeispiel 2 für ein Objektfeld von 0,8 Grad

Fig. 7 - ein Spotdiagramm für Ausführungsbeispiel 3 und Objektfelddurchmesser von 0; 0,2; 0,4; 0,6 und 0,8 Grad

Fig. 8 - die Wellenfrontaberration für Ausführungsbeispiel 3 für ein Objektfeld von 0,8 Grad

Fig. 9 - der Verlauf der sagittalen und tangentialen Bildschalen und der Verzeichnung bis zu einem Objektfeld von 0,8 Grad Durchmesser für das Ausführungsbeispiel 3 bezogen auf ein ebenes Bildfeld 6

Fig. 10 - ein Spotdiagramm für Ausführungsbeispiel 4 und Objektfelddurchmesser von 0; 0,1 und 0,2 Grad

Fig. 11 - die Wellenfrontaberration für Ausführungsbeispiel 4 für ein Objektfeld von 0,2 Grad

Fig. 12 - ein Spotdiagramm für Ausführungsbeispiel 8 und Objektfelddurchmesser von 0; 0.2; 0,4; 0,6 und 0,8 Grad

Fig. 13 - die Wellenfrontaberration für Ausführungsbeispiel 5 für ein Objektfeld von 0,8 Grad

Fig. 14 - ein Spotdiagramm für Ausführungsbeispiel 6 und Objektfelddurchmesser von 0; 0,2; 0,4; 0,6 und 0,8 Grad

Fig. 15 - ein Spotdiagram für Ausführungsbeispiel 7 (Spektrograph) für lineare Objektfelddurchmesser von 0; 0,4 und 0,8 Grad bei der Wellenlänge 0,0004 mm

Fig. 16 - ein Spotdiagram für Ausführungsbeispiel 7 (Spektrograph) für lineare Objektfelddurchmesser von 0; 0,4 und 0,8 Grad bei der Wellenlänge 0,00055 mm

Fig. 17 - ein Spotdiagram für Ausführungsbeispiel 7 (Spektrograph) für lineare Objektfelddurchmesser von 0; 0,4 und 0,8 Grad bei der Wellenlänge 0,0007 mm

Ausführungsbeispiel 1

Es wird ein Ausführungsbeispiel für ein klassisches Cassegrain-System mit 2,5 Meter Durchmesser und der Öffnungszahl $N_{cass} = 6$ gegeben. Der erste, sammelnde Spiegel 1, der als Hauptspiegel des Cassegrainsystems fungiert, arbeitet bei der Offnungszahl $N_1 = 1,5$.

Somit wird der Brennweitenverlängerungsfaktor $m_1 = 4$ gewählt Für die relative Auftreffhöhe auf den zweiten, zerstreuenden Spiegel 2, also den Hilfsspiegel des Cassegrainsystems wird der Abstand zum Spiegel 1 so gewählt, daß sich die relative Auftreffhöhe $k(1) = 1/4$ ergibt. Damit ergibt sich das Verhältnis der Radien der Spiegel 2 und 1 zu $r_{o1} = 1/3$. Um nun die Nullstellung der Petzvalsumme zu erreichen, müssen für den Fall, daß man den Brennweitenverlängerungsfaktor $m_2 = 1$ wählt, die Radien des dritten, sammelnden Spiegel 3 und des vierten, sammelnden Spiegel 4 übereinstimmen und betragsmäßig gleich groß wie der Radius des ersten, sammelnden Spiegels 1 sein. Das Spiegelsystem aus den vier Spiegeln 1, 2, 3 und 4 arbeitet somit bei der Offnungszahl $N_{ges} = 6$.

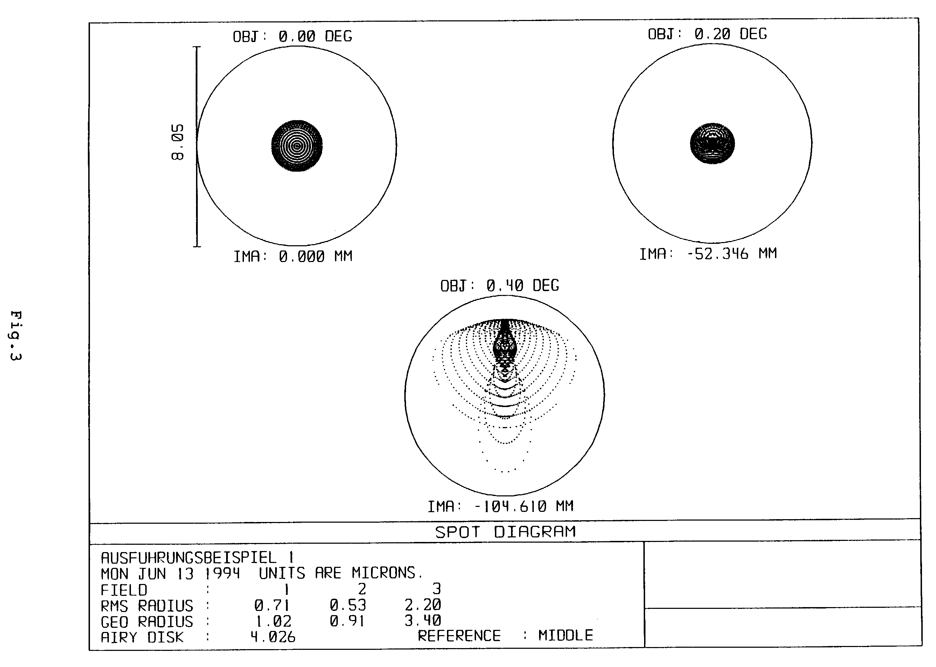

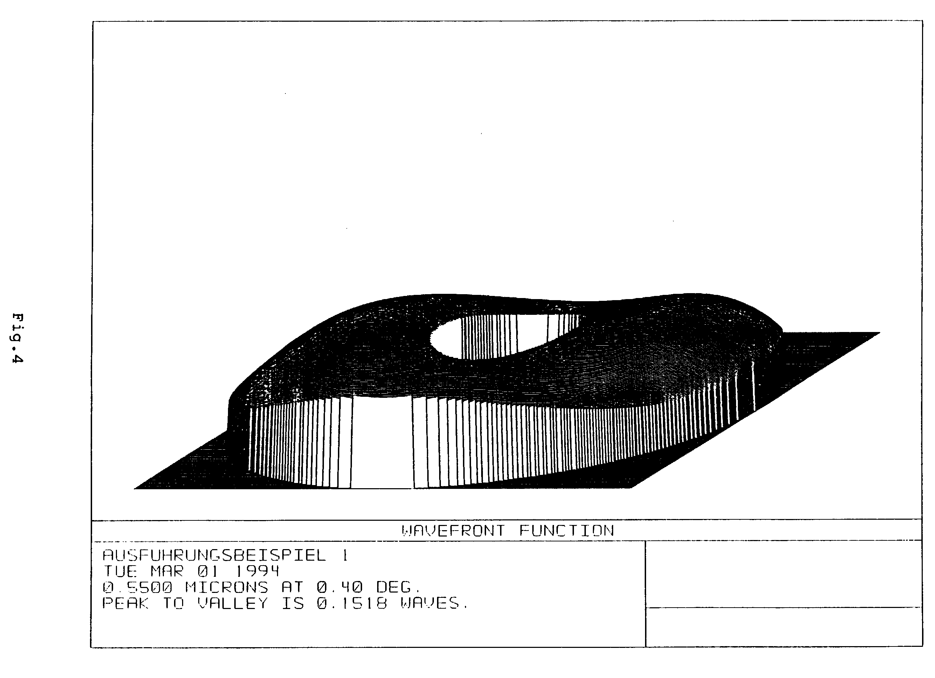

Für das klassische Cassegrainsystem allein ergibt sich der Radius des optimal angepaßten mittleren Bildfeldes zu -1049,92 mm, wobei am Rand des Objektfeldes von 0,8 Grad Durchmesser die Zerstreuungsfigur einen Durchmesser von 0,64 mm aufweist. Das eigentlich beugungsbegrenzt übertragene Objektfeld berägt den Spotdiagrammen nach nur 0,01 Grad beziehungsweise der wellenoptischen Durchrechnung nach nur 0,004 Grad also nur 14 Bogensekunden. Tab. 1 zeigt nun die Daten des Spiegelsystems wie sie sich aus der Theorie 3. Ordnung ergeben Anschließend wurde die Schwarzschildkonstante k3 des dritten, sammelnden Spiegels 3 und der Abstand des vierten, sammelnden Spiegels 4 von diesem Spiegel 3 zur Computeroptimierung freigegeben, wobei sich nun die Ebene des besten Bildes um 0,039 mm von der Gaußschen Bildebene entfernt. Optimiert wurde für ein Objektfeld von 0,8 Grad Durchmesser. Tab. 2 zeigt die Daten dieses optimierten Spiegelsystems. Fig. 3 zeigt das zugehörige Spotdiagramm. Der Kreis symbolisiert das Beugungsscheibchen - also die sogenannte Airy-disk - für die Wellenlänge 0,00055 mm. Man sieht, daß die geometrischen Zerstreuungsscheibchen auf dem gesamten ebenen Bildfeld 6 mit einem Durchmesser von 209,23 mm jeweils innerhalb des Beugungsscheibchens liegen. Gezeigt werden die Spotdiagramme für Objektfelddurchmesser von 0;0,4 und 0,8 Grad. Fig. 4 zeigt die zugehörige Aberration der Wellenfront für den Objektfelddurchmesser 0,8 Grad. Die maximale Aberration, bezogen auf die Wellenlänge 0,00055mm ergibt sich zu 0,1518 Wellen Damit ist das Rayleigh-Kriterium von 0,25 Wellen für eine beugungsbegrenzte Abbildung vom Spiegelsystem erfüllt.

Tab. 1

| Funktion | Radius in mm | Abstand in mm | Durchmesser in mm | Schwarzschildkonstante |
|---|---|---|---|---|
| Spiegel 1 | -7500 | 2812,5 | 2500 | -1 |
| Spiegel 2 | +2500 | 7500 | 670,1 | -2,7777778 |
| Spiegel 3 | -7500 | 7500 | 1004,5 | -2 |
| Spiegel 4 | -7500 | 3750 | 666,2 | 0 |
| Bildebene | unendlich | 0 | 209,26 | 0 |

Die Brennweite des Spiegelsystems beträgt 15000 mm. Die Öffnungszahl ist Nges = 6. Das Spiegelsystem nach Tab.1 ist in 3. Ordnung vollkommen frei von sphärischer Aberration, Koma, Astigmatismus, Petzvalsumme und Bildfeldwölbung und weist eine nur geringe Verzeichnung auf. Durch Computeroptimierung geht aus diesem System jenes in Tab.2 hervor

Tab.2

| Funktion | Radius in mm | Abstand in mm | Durchmesser in mm | Schwarzschildkonstante |
|---|---|---|---|---|
| Spiegel 1 | -7500 | 2812,5 | 2500 | -1 |
| Spiegel 2 | +2500 | 7500 | 670,1 | -2,7777778 |
| Spiegel 3 | -7500 | 7492,814 | 1004,5 | -2,019784 |
| Spiegel 4 | -7500 | 3750,039 | 665,8 | 0 |
| Bildebene | unendlich | 0 | 209,23 | 0 |

Die Brennweite des Spiegelsystems beträgt 15000 mm. Die Öffnungszahl ist Nges = 6

Ausführungsbeispiel 2

Das Ausführungsbeispiel 2 gibt ein erfindungsgemäßes Spiegelsystem nach Anspruch 2. Das Cassegrainartige Spiegelsystem wird hierbei durch ein Ritchey-Chretien-System gebildet. Dazu kommt ein erfindungsgemäßer Zweispiegelkorrektor, der seinem Wesen nach aus zwei sammelnden Spiegeln 3 und 4 besteht, die substantiell gleichen axialen Krümmungsradius aufweisen und substantiell parabolisch ausgebildet sind. Tab.3 gibt die Daten eines solchen Spiegelsystems mit vier Spiegeln 1, 2, 3 und 4 bei dem das Ritchey-Chretien-System für sich optimiert ist für 0,8 Grad Objektfelddurchmesser. Die Abstände und Krümmungsradien dieses Ritchey-Chretien-Systems sind dieselben wie die des klassischen Cassegrainsystems im Ausführungsbeispiel 1. Der erste, sammelnde Spiegel 1, der den Hauptspiegel des Ritchey-Chretien-Systems bildet, erhält 2500 mm Durchmesser und eine Öffnungszahl von N1 = 1,5 Der Krümmungsradius des optimal angepaßten mittleren Bildfeldes würde für das Ritchey-Chretien-System zu -999,129 mm resultieren, wobei der Durchmesser der Zerstreuungsfigur am Rande des Objektfeldes von 0,8 Grad Durchmesser 0,223 mm beträgt.

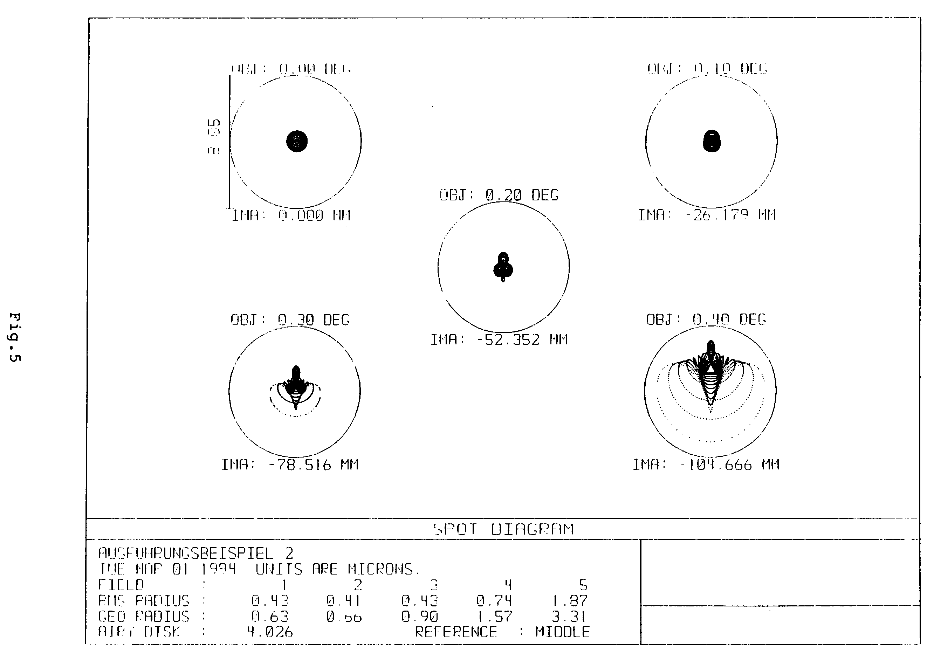

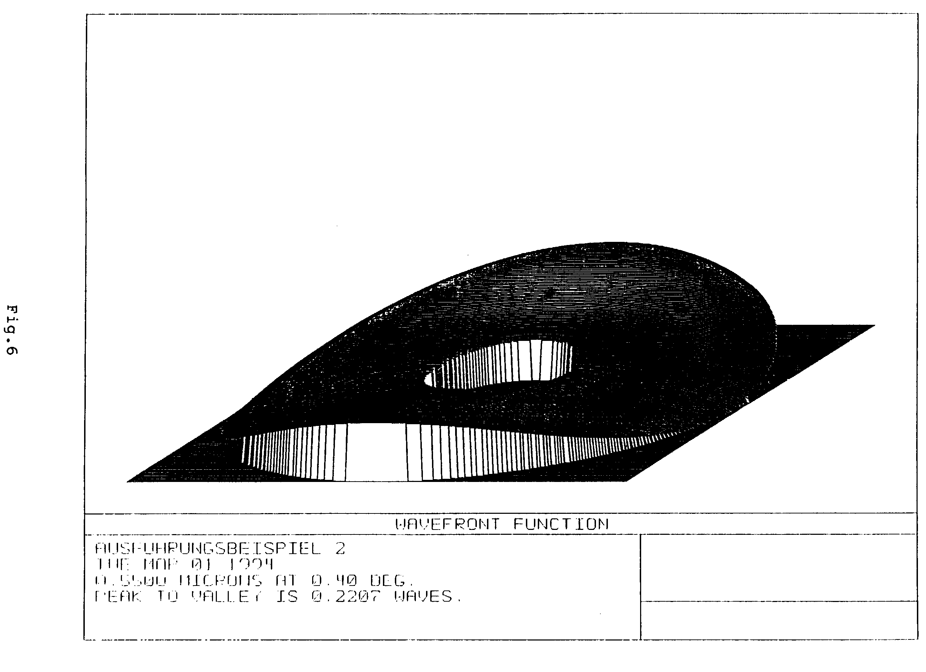

Die Öffnungszahl des Spiegelsystems aus den Spiegeln 1, 2, 3 und 4 resultiert wiederum zu Nges = 6. Fig. 5 zeigt die Spotdiagramme für 0; 0,2; 0,4; 0,6 und 0,8 Grad Objektfelddurchmesser. Der Kreis symbolisiert wiederum die Airy-disk für die Wellenlänge 0,00055 mm mit einem Durchmesser von 0,11 Bogensekunden beziehungsweise 0,008 mm. Man erkennt, daß für das gesamte Objektfeld von 0,8 Grad Durchmesser die jeweiligen Zerstreuungsscheibchen innerhalb der Airy-disk liegen. Das die Abbildung auch wellenoptisch beugungsbegrenzt ist verdeutlicht Fig.6. Die maximale Aberration der Wellenfront liegt am Rande des Objektfeldes von 0,8 Grad Durchmesser bezüglich der Wellenlänge 0,00055 mm bei 0,2207 Wellen.

Tab.3

| Funktion | Radius in mm | Abstand in mm | Durchmesser in mm | Schwarzschildkonstante |
|---|---|---|---|---|
| Spiegel 1 | -7500 | 2812,5 | 2500 | -1,042388 |
| Spiegel 2 | -2500 | 7500 | 671,3 | -3,180544 |
| Spiegel 3 | -7500 | 10861,6 | 1003,6 | -1 |

Tab.3 (fortgesetzt)

| Funktion | Radius in mm | Abstand in mm | Durchmesser in mm | Schwarzschildkonstante |
|----------|--------------|---------------|-------------------|------------------------|
| Spiegel 4 | -7500 | 3749,974 | 853,3 | -1 |
| Bildebene | unendlich | 0 | 209,34 | 0 |

Die Brennweite des Spiegelsystems beträgt 15000 mm. Die Öffnungszahl ist Nges = 6.

Ausführungsbeispiel 3

Das Ausführungsbeispiel 3 gibt ein erfindungsgemäßes Spiegelsystem gemäß Anspruch 3. Das Cassegrainartige Spiegelsystem wird hierbei durch ein Spiegelsystem gebildet, bei dem der zweite, zerstreuende Spiegel 2 gleich dem des äquivalenten klassischen Cassegrainsystems ist. Der erste, sammelnde Spiegel 1, der den Hauptspiegel des Cassegrainartigen Spiegelsystems bildet, ist nun aber sphärisch überkorrigiert, das heißt hyperbolisch ausgebildet. Dazu kommt ein erfindungsgemäßer Zweispiegelkorrektor, der seinem Wesen nach aus zwei sammelnden Spiegeln 3 und 4 besteht, wobei Spiegel 3 substantiell parabolisch und Spiegel 4 substantiell sphärisch ausgebildet ist und mit seinem Krümmungsmittelpunkt substantiell auf dem Schnittpunkt von optischer Achse und der reellen Austrittspupille liegt, die durch das afokale Teilsystem, das aus den Spiegeln 1, 2 und 3 gebildet wird, liegt. Diese Austrittsupille ist ihrer Lage und Form nach aber eine Funktion des jeweiligen Objektfelddurchmessers. Damit ist die Einstellung des Abstandes des Spiegels 3 von der Austrittspupille nicht limitiert auf die paraxiale Austrittspupille und der gemäße Anspruch 3 in diesem Sinn zu verstehen. Tab 4 gibt die Daten eines solchen Spiegelsystems mit vier Spiegeln.

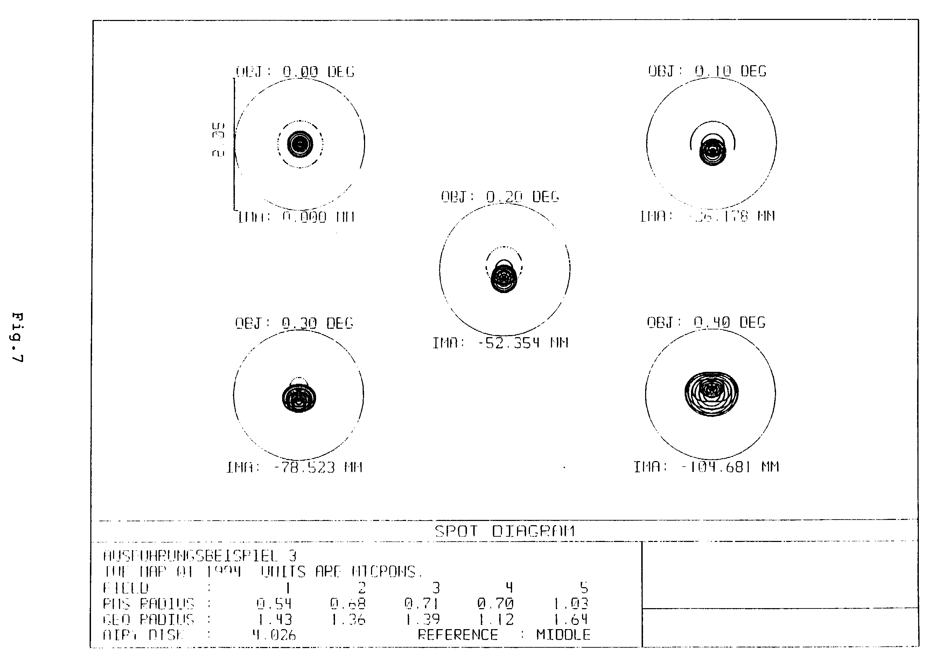

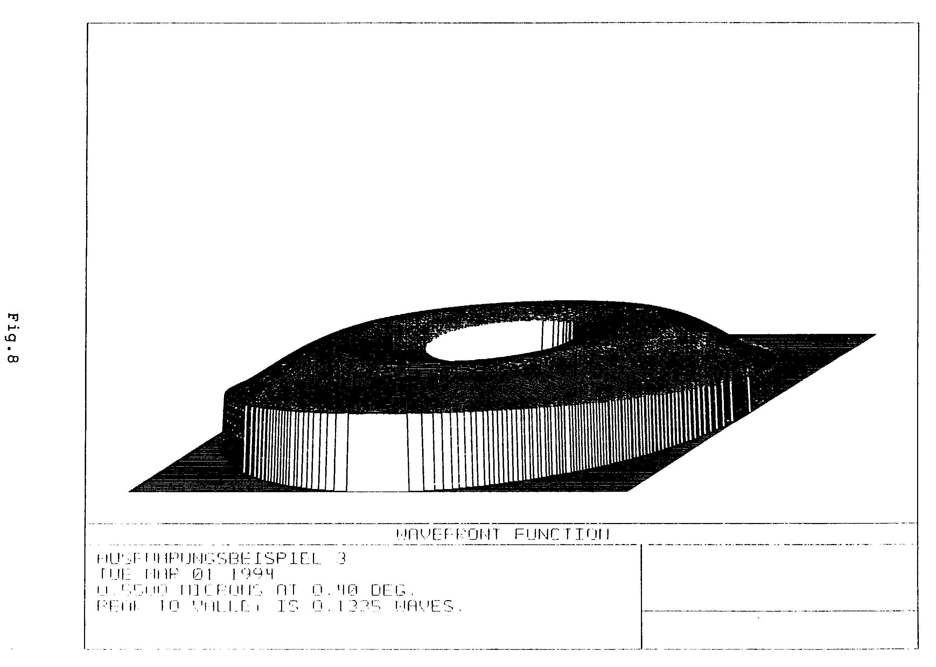

Die Öffnungszahl des Spiegelsystems aus den Spiegeln 1, 2, 3 und 4 resultiert wiederum zu Nges = 6. Fig. 7 zeigt die Spotdiagramme für 0; 0,2; 0,4; 0,6 und 0,8 Grad Objektfelddurchmesser. Der Kreis symbolisiert wiederum die Airy-disk für die Wellenlänge 0,00055 mm mit einem Durchmesser von 0,11 Bogensekunden beziehungsweise 0,008 mm. Man erkennt, daß für das gesamte Objektfeld von 0,8 Grad Durchmesser die jeweiligen Zerstreuungsscheibchen innerhalb der Airy-disk liegen. Das die Abbildung auch wellenoptisch beugungsbegrenzt ist verdeutlicht Fig.8. Die maximale Aberration der Wellenfront liegt am Rande des Objektfeldes von 0,8 Grad Durchmesser bezüglich der Wellenlänge 0,00055 mm bei 0,1335 Wellen.

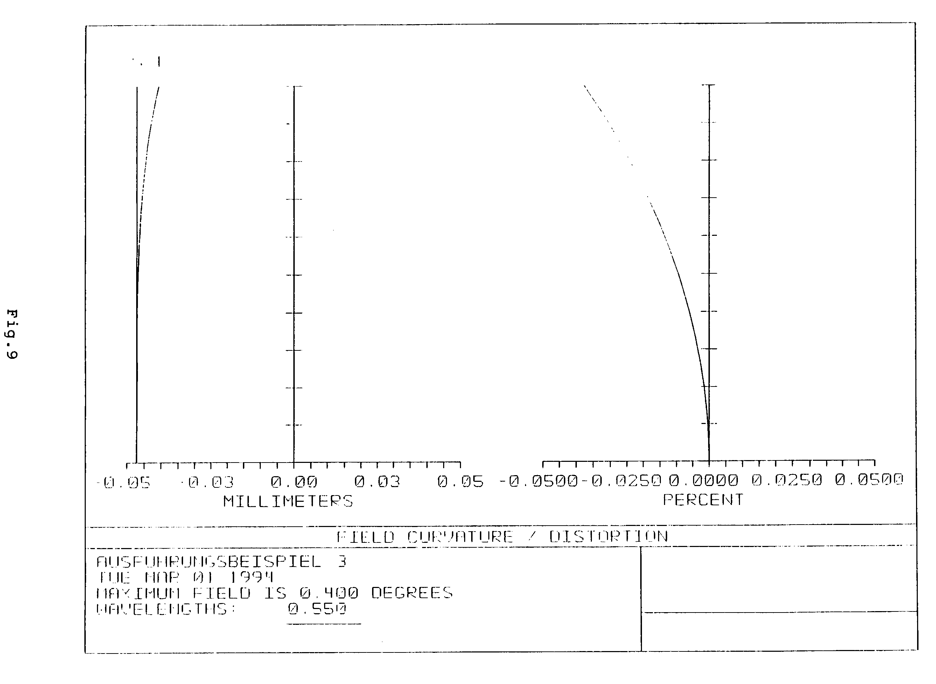

Fig.9 gibt die sagittale und tangentiale Bildfeldkrümmung und die Verzeichnung.

Tab.4

| Funktion | Radius in mm | Abstand in mm | Durchmesser in mm | Schwarzschildkonstante |
|----------|--------------|---------------|-------------------|------------------------|
| Spiegel 1 | -7500 | 2812,5 | 2500 | -1,004124 |
| Spiegel 2 | +2500 | 7500 | 670,2 | -2,777778 |
| Spiegel 3 | -7500 | 14300,97 | 1003,5 | -1 |
| Spiegel 4 | -7500 | 3750,047 | 1045,9 | 0 |
| Bildebene | unendlich | 0 | 209,37 | 0 |

Die Brennweite des Spiegelsystems beträgt 15000 mm. Die Öffnungszahl ist Nges = 6.

Ausführungsbeispiel 4

Ausführungsbeispiel 4 gibt ein erfindungsgemäßes Spiegelsystem bei dem die Spiegel 1 und 2 ein klassisches Cassegrainsystem bilden, dessen Daten mit denen des Ausführungsbeispiels 1 übereinstimmen. Es wird nun aber ein Zweispiegelkorrektor aus den Spiegeln 3 und 4 so gegeben, daß dieser die Brennweite des Cassegrainsystems um den Faktor 3 verlängert. Somit resultiert die Öffnungszahl des Spiegelsystems mit 4 Spiegeln zu Nges = 18. Der Zweispiegelkorrektor aus den beiden Sammelspiegeln 3 und 4 ist dabei so ausgebildet, daß die Petzvalsumme des Spiegelsystems aus den vier Spiegeln 1,2,3 und 4 zu Null wird, wodurch in Abwesenheit von Astigmatismus auch hier ein ebenes Bildfeld 6 erhalten wird. Der gegebene Zweispiegelkorrektor kann nun gemäß Anspruch 6 mit dem Zweispiegelkorrektor, der im Ausführungsbeispiel 1 gegeben wurde, in einer revolverartigen Anordnung zusammengefaßt werden, wobei ein kleiner Planspiegel 8, der vorzugsweise in der Ebene des Zwischenbildes 5 angeordnet wird, dazu dient den Strahlengang in den jeweiligen Korrektor einzukoppeln, wodurch unterschiedliche Gesamtbrennweiten des Spiegelsystems möglich werden.

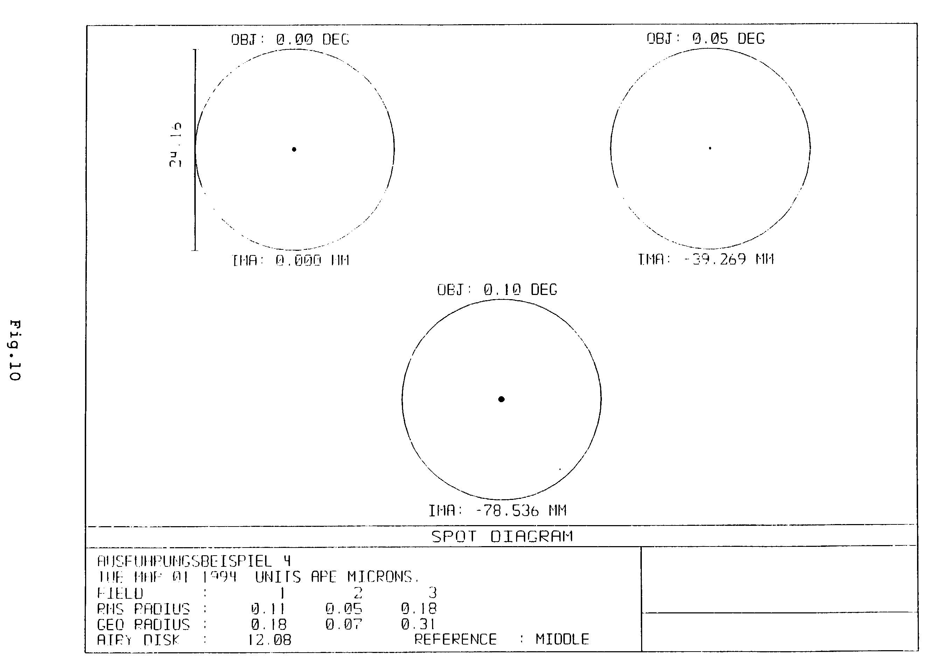

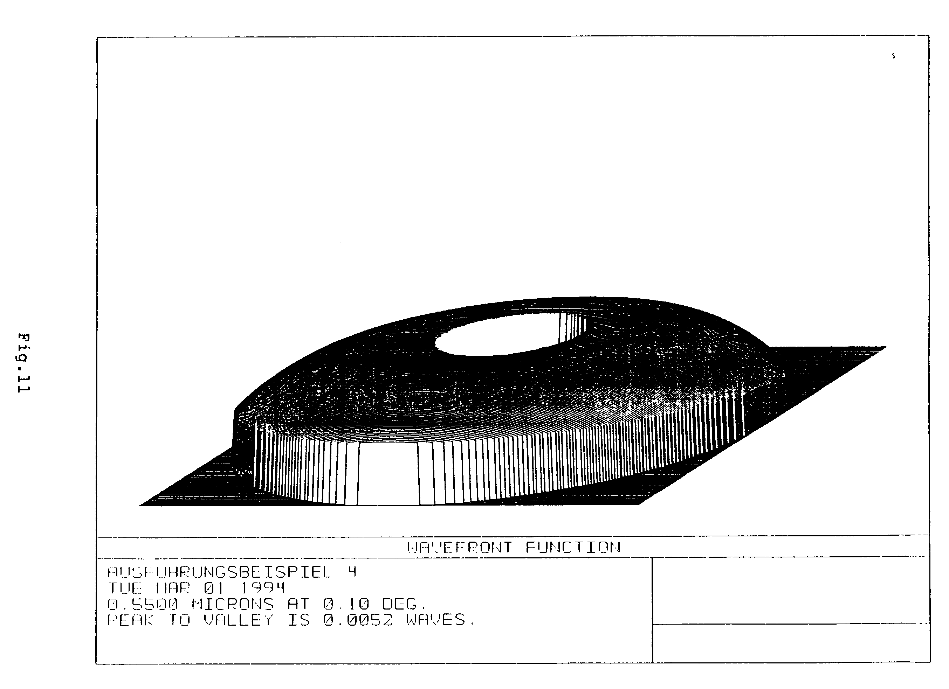

Fig. 10 zeigt die Spotdiagramme für 0; 0,1 und 0,2 Grad Objektfelddurchmesser. Der Kreis symbolisiert wiederum die Airy-disk für die Wellenlänge 0,00055 mm mit einem Durchmesser von 0,11 Bogensekunden beziehungsweise 0,02416 mm. Man erkennt, daß für das gesamte Objektfeld von 0,2 Grad Durchmesser die jeweiligen Zerstreuungsscheibchen sehr viel kleiner sind als die Airy-disk. Die maximale Größe der geometrischen Zerstreuungsscheibchen beträgt nur 0,00062 mm. Fig. 11 zeigt die maximale Aberration der Wellenfront zu 0,0052 Wellen bezüglich der Wellenlänge 0,00055 mm am Rand des Objektfeldes von 0,2 Grad Durchmesser. Tab.5 gibt die Daten eines solchen Spiegelsystems mit vier Spiegeln 1, 2, 3 und 4

Tab.5

| Funktion | Radius in mm | Abstand in mm | Durchmesser in mm | Schwarzschildkonstante |
|---|---|---|---|---|
| Spiegel 1 | -7500 | 2812,5 | 2500 | -1 |
| Spiegel 2 | +2500 | 6250 | 639,6 | -2,777778 |
| Spiegel 3 | -5000 | 15022,79 | 497,3 | -1,036974 |
| Spiegel 4 | -15000 | 7500,004 | 650,8 | 0 |
| Bildebene | unendlich | 0 | 157,08 | 0 |

Die Brennweite des Spiegelsystems beträgt 45000 mm. Die Öffnungszahl ist Nges = 18.

Ausführungsbeispiel 5

Ausführungsbeispiel 5 gibt ein erfindungsgemäßes Spiegelsystem, bei dem die Spiegel 1 und 2 ein klassisches Cassegrainsystem bilden, dessen Daten mit denen des Ausführungsbeispiels 1 übereinstimmen. Allerdings wurde der Durchmesser des ersten, sammelnden Spiegel 1, also des Hauptspiegels des Cassegrainsystems auf 3750 mm vergrößert, sodaß dieser jetzt die Öffnungszahl N1 = 1 aufweist. Demzufolge weist das klassische Cassegrainsystem jetzt die Öffnungszahl Ncass = 4 auf. Gemäß Anspruch 6 werden nun auf den Spiegeln 3 und 4 des Zweispiegelkorrektors asphärische Terme höherer Ordnung in die Gestaltung der Spiegeloberflächen einbezogen, was zu einer Verbesserung der Abbildungsqualität für kleine Öffnungszahlen führt. Beide Spiegel 3 und 4 weisen gleichen axialen Krümmungsradius auf sodaß die Öffnungszahl des Spiegelsystems aus den vier Spiegeln 1 ,2 ,3 und 4 zu Nges = 4 folgt.

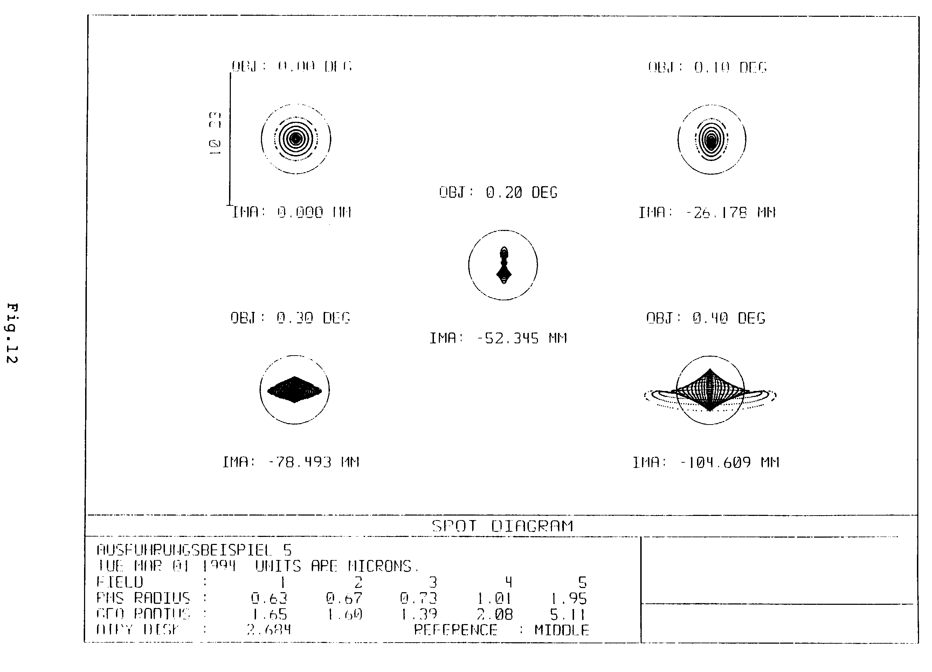

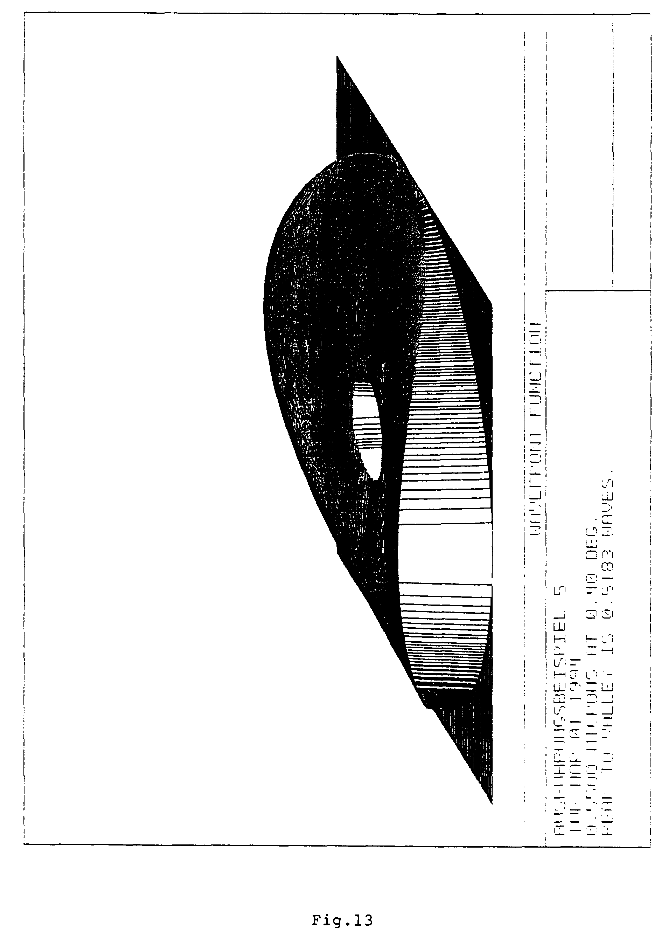

Fig. 12 zeigt die Spotdiagramme für 0 ;0,2 ;0,4 ; 0,6 und 0,8 Grad Objektfelddurchmesser. Der Kreis symbolisiert wiederum die Airy-disk für die Wellenlänge 0,00055 mm mit einem Durchmesser von 0,07 Bogensekunden beziehungsweise 0,0054 mm. Man erkennt, daß etwa bis 0,7 Grad Durchmesser des Objektfeldes die Zerstreuungsscheibchen innerhalb der Airy-disk liegen Fig.13. zeigt die maximale Aberration der Wellenfront am Rande des Objektfelddurchmessers von 0,8 Grad bezüglich der Wellenlänge 0,00055 mm zu 0,5183 Wellen. Tab.6 gibt die Daten dieses Spiegelsystems. Die Bildebene liegt 0,008 mm vor der Gauß'schen Bildebene.

Tab.6

| Funktion | Radius in mm | Abstand in mm | Durchmesser in mm | Schwarzschildkonstante |
|---|---|---|---|---|
| Spiegel 1 | -7500 | 2812,5 | 3750 | -1 |
| Spiegel 2 | +2500 | 7500 | 995,1 | -2,777778 |
| Spiegel 3 | -7500 | 7380,714 | 1315,9 | -2,023543 |
| Spiegel 4 | -7500 | 3749,992 | 974,3 | 0 |
| Bildebene | unendlich | 0 | 209,23 | 0 |

Dabei ist Spiegel 3,4 gegeben mit: $z = c * r^2/[\ 1 + \sqrt{1 - (1 + k) * c^2 * r^2}\ ] + \alpha^2 * r^4 + \alpha_3 * r^6$ wobei r die radiale Entfernung zur optischen Achse in einer Ebene ist, die senkrecht auf dieser steht und den Spiegelvertex beinhaltet; c ist die axiale Krümmung des jeweiligen Spiegels.
Spiegel 3 : $k = -2,023543$ ; $\alpha_2 = -1,298468 * 10^{-15} * mm^{-3}$ ; $\alpha_3 = 1,667509 * 10^{-20} * mm^{-5}$
Spiegel 4 : $k = 0$ ; $\alpha_2 = +6,010594 * 10^{-15} * mm^{-3}$ ; $\alpha_3 = 1,958723 * 10^{-21} * mm^{-5}$
Für Spiegel 3 und 4 sind die axialen Krümmungsradien im mathematischen Sinn zu nehmen, das heißt da Licht von links kommt, sind Radien entsprechend zu zählen,wobei $c_i = Raxial(i)^{-1}$ gilt mit i = 3 für Spiegel 3 und i = 4 für Spiegel 4.

Ausführungsbeispiel 6

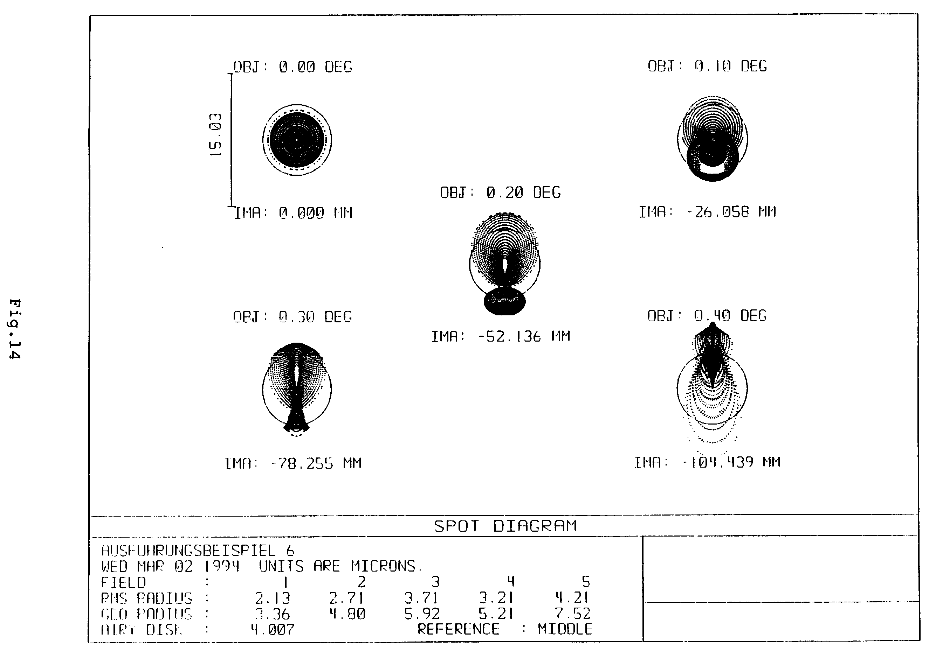

Ausführungsbeispiel 6 venwendet dasselbe Cassegrainsystem mit 3750 mm Durchmesser wie Ausführungsbeispiel 5. Der Zweispiegelkorrektor aus den Spiegeln 3 und 4 wurde kompakter gestaltet, wodurch eine Bildfeldebnungslinse 9 notwendig wird, um das Bildfeld 6 zu ebnen Die Bildfeldebnungslinse 9 wurde konvexplan ausgeführt, wobei ihre plane Seite dem Detektor 7 zugewandt ist und mit dem Bildfeld 6 zusammenfällt. Die Mittendicke der Bildfeldebnungslinse 9 wurde zu 10 mm gewählt. Sie besteht aus BK7 - Glas des Schottkataloges. Die Spiegel 3 und 4 des Zweispiegelkorrektors weisen wieder asphärische Terme höherer Ordnung auf. Fig. 14 zeigt die Spotdiagramme für 0 ;0,2 ;0,4 ,0,6 und 0,8 Grad Objektfelddurchmesser und für Wellenlängen von 0,0004 mm ; 0,00055 mm und 0,0007 mm. Der Kreis symbolisiert die Airy-disk für die Wellenlänge 0,0007 mm mit einem Durchmesser von 0,11 Bogensekunden beziehungsweise 0,008 mm. Man erkennt, daß im betrachteten Wellenlängenintervall die Zerstreuungsfiguren kleiner als 0,016 mm sind. Der Abstand der Spiegel 3 und 4 des Zweispiegelkorrektors ist nicht wesentlich größer als der Durchmesser des Spiegels 1.

Tab.7 gibt die Systemdaten. Die Glaskennzahl von BK7 ist 517642.

Tab.7

| Funktion/ Material | Radius in mm | Abstand in mm | Durchmesser in mm | Schwarzschildkonstante |
|---|---|---|---|---|
| Spiegel 1 | -7500 | 2812,5 | 3750 | -1 |
| Spiegel 2 | +2500 | 5750 | 995,1 | -2,777778 |
| Spiegel 3 | -4000 | 3973,492 | 800,2 | -2,00976 |
| Spiegel 4 | -4000 | 1993,381 | 617,3 | 0 |
| Bildfeldlinse/BK7 | 729,6393 | 10 | 209,5 | 0 |
| | unendlich | 0 | 209 | 0 |
| Bildebene | unendlich | 0 | 208,89 | 0 |

Die Brennweite des Spiegelsystems beträgt 14928,8 mm. Die Öffnungszahl ist $N_{ges}$ = 3,98126 Dabei ist Spiegel 3,4 gegeben mit: $z = c * r^2/[1 + \sqrt{1 - (1 + k)* c^2 * r^2}] + \alpha_2 * r^4 + \alpha_3 * r^6$ wobei r die radiale Entfernung zur optischen Achse in einer Ebene ist, die senkrecht auf dieser steht und den Spiegelvertex beinhaltet; c ist die axiale Krümmung des jeweiligen Spiegels.

Spiegel 3 : k = -2.00976 ; $\alpha_2$ = -3,961992 * $10^{-14}$ * $mm^{-3}$; $\alpha_3$ = 4,976178 * $10^{-19}$ * $mm^{-5}$

Spiegel 4 : k = 0 ; $\alpha_2$ = -5,696940 * $10^{-15}$ * $mm^{-3}$; $\alpha_3$ = 1,422265 * $10^{-19}$ * $mm^{-5}$

Für Spiegel 3 und 4 sind die axialen Krümmungsradien im mathematischen Sinn zu nehmen, das heißt da Licht von links kommt,sind Radien entsprechend zu zählen, wobei $c_i$ = $Raxial(i)^{-1}$ gilt mit i = 3 für Spiegel 3 und i = 4 für Spiegel 4.

Ausführungsbeispiel 7

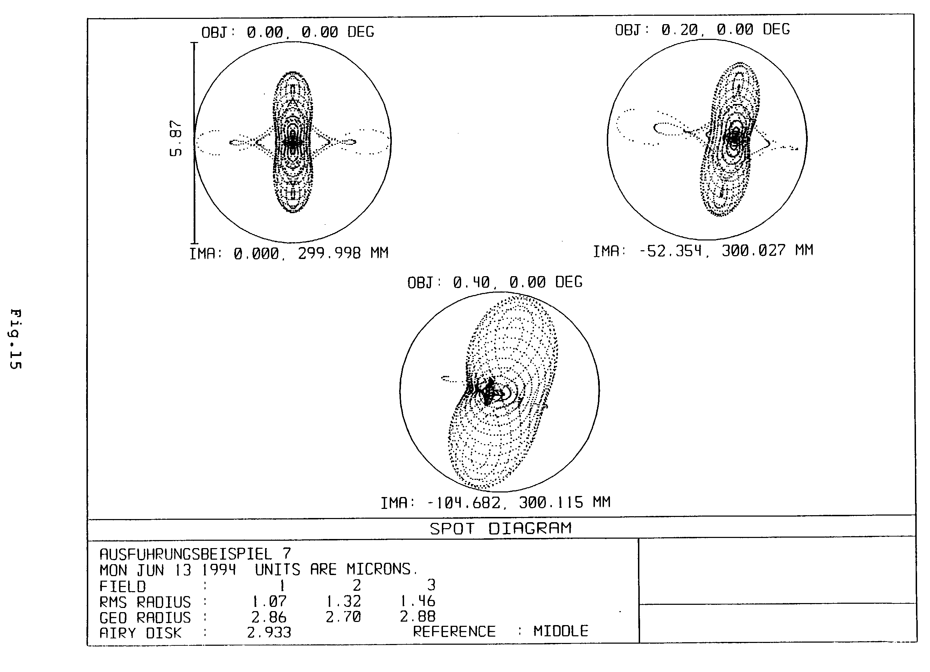

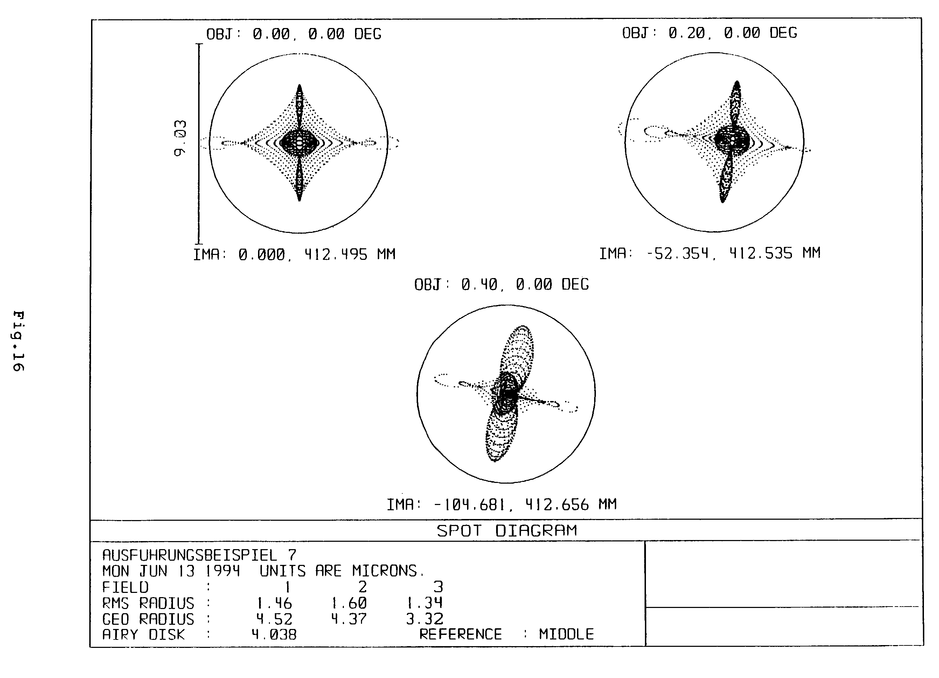

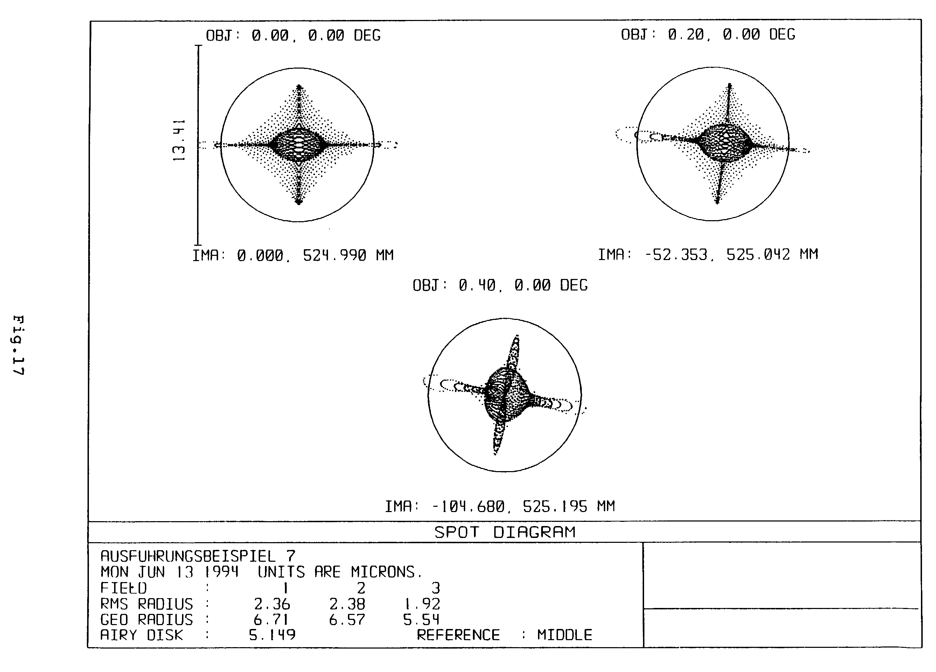

Ausführungsbeispiel 7 verwendet dasselbe Spiegelsystem wie Ausführungsbeispiel 3, wobei jetzt ein Plangitter 11 etwa in der Ebene der reellen Austrittspupille des afokalen Teilsystems, das aus den Spiegeln 1, 2 und 3 gebildet wird, angeordnet wird. Der genaue Abstand der paraxialen Lage der reellen Austrittspupille vom Vertex des Kollimatorspiegels 3 beträgt 6796.875 mm. Bedingt durch das Wandern der Austrittspupille in Abhängigkeit vom Objektfeldwinkel wird aber der Wert des Ausführungsbeispiels 3 verwandt. Das Plangitter 11 ist ein Reflexionsgitter mit 200 Linien/mm und wird in der ersten Ordnung benutzt. Der letzendlich abbildende Kugelspiegel 4 wird nur so weit ausgeführt wie er notwendig ist um die vom Plangitter 11 ausgehenden Parallellichtbündel verschiedener Neigung, die verschiedenen Wellenlängen zugeordnet sind, aufzufangen. Der Spektralbereich umfasse die Wellenlängen von 0,0004 mm bis 0,0007 mm. Somit umfaßt die Länge des Spektrums für den Objektfeldwinkel 0 Grad 225 mm. In einem Abstand von 0,4 Grad von der optischen Achse im Objektraum, also einem linearen Objektfelddurchmesser von 0,8 Grad, ist die Länge des Spektrums 225,08 mm. Die Ausdehnung in Ortsrichtung ist 209,36 mm. In Ortsrichtung, also parallel zur Spaltebene ist das Bildfeld eben. In Dispersionsrichtung also senkrecht zur Ortsrichtung ist das Bildfeld gekrümmt. Der Krümmungsradius in Dispersionsrichtung ist in 3. Ordnung gleich der Hälfte des Betrages des Krümmungsradius des Kugelspiegels 4. Durch computerbedingte Spotminimierung ergibt sich ein etwas abweichender Wert. Ursache sind die Aberrationen höherer als 3. Ordnung im afokalen Teilsystem aus den Spiegeln 1, 2 und 3. Die Figuren 15, 16 und 17 geben für die Wellenlängen 0,0004 mm; 0,00055 mm und 0,0007 mm die Spotdiagramme für die Gesichtsfelddurchmesser 0 Grad; 0,4 Grad und 0,8 Grad. Der Kreis symbolisiert die dem Spiegelsystem und der jeweiligen Wellenlänge zugeordnete Airy-disk. Eine Untersuchung der zugehörigen Wellenfrontaberrationen zeigt, daß diese unterhalb des Rayleigh-Kriteriums von 1/4 Wellenlänge bleiben. Damit ist nun sowohl in Ortsrichtung wie in Dispersionsrichtung eine beugungsbegrenzte Auflösung bei der Öffnungszahl 6 des Gesamtsystems und 0,8 Grad linearem Objektfelddurchmesser realisiert.

Diese im Prinzip nur unter Weltraumbedingungen realisierbare hohe Auflösung ist aber nicht vollständig darstellbar, da die Größe der Bildaberrationen in der Zwischenbildebene 5 je nach gewähltem Durchmesser des zu übertragenden Objektfeldes eine untere Grenze für die Spaltbreite setzt, die über der Große des Beugungsscheibchens in der Zwischenbildebene 5 liegt. Nachfolgende Tab 8 gibt die Systemdaten des Ausführungsbeispiels 7.

Tab. 8

| Funktion | Radius in mm | Abstand in mm | Durchmesser in mm | Schwarzschildkonstante |
|---|---|---|---|---|
| Spiegel 1 | -7500 | 2812,5 | 2500 | -1,004071 |
| Spiegel 2 | +2500 | 7500 | 670,2 | -2,777778 |
| Spiegel 3 | -7500 | 6800,97 | 1003,5 | -1 |
| Plangitter | unendlich | 7500 | 627,48 | 0 |
| Spiegel 4 | -7500 | 3750,047 | (2743,86 ) | 0 |
| Bildebene | 3743,053/unendl. | 0 | (1071,06) | 0 |

Das verwendete Plangitter hat 200 Linien/mm. Eine höhere Linienanzahl ist natürlich möglich. Allerdings wachsen dann wegen der größeren Beugungswinkel am Plangitter die Schwierigkeiten die Bildaberrationen auf beugungsbegrenztem Niveau zu halten. Diese Schwierigkeiten sind auf einen Effekt zurückzuführen, der der sogenannten radialen Überkorrektion einer Schmidtkamera verwandt ist. Dort projiziert sich die korrigierende Eintrittspupille für schräg einfallende Parallelbündel in tangentialer Richtung zunehmend verkürzt auf den beleuchteten Abschnitt des Kugelspiegels, während sich in sagittaler Richtung die Korrektion auf die gewünschten Durchmesser projiziert. Dieser Effekt, der oft unzulässig vereinfachend als Astigmatismus interpretiert wird, tritt im Ausführungsbeispiel 7 natürlich auch auf- allerdings je nach Objektfeld modifiziert durch die Aberrationen höherer Ordnung im afokalen Teilsystem aus den Spiegeln 1, 2 und 3.

Die Durchmesserwerte für den Spiegel 4 und die Bildebene 5 sind in Klammern gesetzt, da sie die maximalen Werte der Ausdehnung des sphärischen Spiegels 4 darstellen. In der Praxis wird der sphärische Spiegel so ausgeführt, daß nur seine beleuchteten Teile materiell vorhanden sind und er somit den gedachten außeraxialen Abschnitt des größeren, axial zentrierten, sphärischen Spiegels darstellt. Es versteht sich von selbst, daß für das Bildfeld 6 dasselbe gilt. Das Bildfeld 6 ist hierbei eine Zylinderfläche deren Krümmung in Dispersionsrichtung liegt und konvex gegen das einfallende Licht ist. In Ortsrichtung ist im Ausführungsbeispiel 7 das Bildfeld 6 eben - hat somit in dieser Richtung unendlichen Krummungsradius.

Gemäß Anspruch 10 kann der im Ausführungsbeispiel 7 hyperbolische Spiegel 1 auch parabolisch ausgebildet werden, da seine Schwarzschildkonstante nur wenig von der eines parabolischen Spiegels abweicht. Die geringe, notwendige zusätzliche Verflachung dieses Spiegels zum Rande hin kann nun mit Stellgliedern im Sinne der aktiven Optik realisiert werden. Die notwendige Randverflachung beträgt etwa 10 Wellenlängen bei 0,00055 mm Wellenlänge.

**Patentansprüche**

1. Spiegelsystem mit vier Spiegeln (1), (2), (3) und (4), die eine gemeinsame optische Achse aufweisen, wobei in Richtung des Lichteinfalls der erste Spiegel (1) sammelnd, der zweite Spiegel (2) zerstreuend, der dritte Spiegel (3) sammelnd und der vierte Spiegel (4) sammelnd ausgebildet sind, wobei sich der zweite Spiegel (2) zwischen dem Vertex des ersten Spiegels (1) und dessen paraxialen Brennpunkt befindet, wobei nach der Reflexion am zweiten, zerstreuenden Spiegel (2) ein reelles Zwischenbild (5) entsteht, wobei der dritte, sammelnde Spiegel (3) so angeordnet ist, daß sein paraxialer Brennpunkt substantiell mit dem Schnittpunkt von optischer Achse und der Ebene des reellen Zwischenbildes (5) zusammenfällt, wobei einfallendes Parallellicht vom ersten sammelnden Spiegel (1) auf den zweiten, zerstreuenden Spiegel (2) reflektiert wird, der das Licht in die Ebene des Zwischenbildes (5) reflektiert, von wo aus es auf den dritten, sammelnden Spiegel (3) gelangt, der das auf ihn einfallende Licht parallel auf den vierten, sammelnden Spiegel (4) reflektiert, der das auf ihn auftreffende Licht in das Bildfeld (6) reflektiert, in dem ein Detektor (7) einbringbar ist,

**dadurch gekennzeichnet,**

**daß** der erste sammelnde Spiegel (1) parabolisch; der zweite, zerstreuende Spiegel (2) hyperbolisch; der dritte, sammelnde Spiegel (3) hyperbolisch und der viertel sammelnde Spiegel (4) substantiell sphärisch ausgebildet ist, wobei der Krümmungsmittelpunkt des vierten, sammelnden Spiegels (4) substantiell auf dem Vertex des dritten, sammelnden Spiegels (3) liegt, wobei die sphärische Aberration des dritten, sammelnden Spiegels (3) die des vierten, sammelnden Spiegels (4) kompensiert, wobei die hyperbolische Formgebung des zweiten, zerstreuenden Spiegels (2) der in einem klassischen Cassegrainsystem entspricht, wobei die Schwarzschildkonstante k2 des zweiten, zerstreuenden Spiegels (2) gegeben ist durch :

$$k2 = - [(m1 + 1)/(m1 - 1)]^2,$$

wobei m1 der Brennweitenverlängerungsfaktor ist, der durch den zweiten, zerstreuenden Spiegel (2) bewirkt wird und sich ergibt aus.

$$m1 = ro1 /(ro1 - k(1)),$$

wobei ro1 der Betrag des Verhältnisses der axialen Krümmungsradien des zweiten, zerstreuenden Spiegels (2) zum axialen Krümmungsradius des ersten, sammelnden Spiegels (1) ist mit:

$$ro1 = |Raxial(2) /Raxial(1)|$$

wobei Raxial(1) der axiale Krümmungsradius des ersten, sammelnden Spiegels (1) ist und wobei Raxial(2) der axiale Krümmungsradius des zweiten, zerstreuenden Spiegels (2) ist, wobei k(1) die relative, paraxiale Auftreffhöhe auf den zweiten, zerstreuenden Spiegel(2) bezüglich eines Parallelbündels ist, daß parallel zur optischen Achse auf den ersten, sammelnden Spiegels (1) auftrifft und sich ergibt mit:

$$k(1) = 1 - 2 * a2/|Raxial(1)|,$$

wobei a2 der positiv gezählte Abstand zwischen dem Vertex des ersten, sammelnden Spiegels (1) zum Vertex des zweiten, zerstreuenden Spiegels (2) ist, wobei die Schwarzschildkonstante k3 des dritten, sammelnden Spiegels (3) substantiell gegeben ist durch:

$$k3 = -1 - |Raxial(3)/Raxial(4)|^3,$$

wobei Raxial(3) der axiale Krümmungsradius des dritten, sammelnden Spiegels (3) ist und wobei Raxial(4) der axiale Krümmungsradius des vierten, sammelnden Spiegels (4) ist, wodurch das Spiegelsystem aplanatisch und anastigmatisch wird.

**2.** Spiegelsystem mit vier Spiegeln (1), (2), (3) und (4), die eine gemeinsame optische Achse aufweisen, wobei in Richtung des Lichteinfalls der erste Spiegel (1) sammelnd, der zweite Spiegel (2) zerstreuend,der dritte Spiegel (3) sammelnd und der vierte Spiegel (4) sammelnd ausgebildet sind, wobei sich der zweite Spiegel (2) zwischen dem Vertex des ersten Spiegels (1) und dessen paraxialen Brennpunkt befindet, wobei nach der Reflexion am zweiten, zerstreuenden Spiegel (2) ein reelles Zwischenbild (5) entsteht, wobei der dritte, sammelnde Spiegel (3) so angeordnet ist, daß sein paraxialer Brennpunkt substantiell mit dem Schnittpunkt von optischer Achse und der Ebene des reellen Zwischenbildes (5) zusammenfällt, wobei einfallendes Parallellicht vom ersten sammelnden Spiegel (1) auf den zweiten, zerstreuenden Spiegel (2) reflektiert wird, der das Licht in die Ebene des Zwischenbildes (5) reflektiert, von wo aus es auf den dritten, sammelnden Spiegel (3) gelangt, der das auf ihn einfallende Licht. parallel auf den vierten, sammelnden Spiegel (4) reflektiert, der das auf ihn auftreffende Licht. in das Bildfeld (6) reflektiert, in dem ein Detektor (7) einbringbar ist,
**dadurch gekennzeichnet.**
**daß** der erste, sammelnde Spiegel (1) hyperbolisch der zweite, zerstreuende Spiegel 2 hyperbolisch; der dritte, sammelnde Spiegel (3) und der vierte, sammelnde Spiegel (4) substantiell parabolisch ausgebildet sind, wobei der erste, sammelnde Spiegel (1) und der zweite, zerstreuende Spiegel (2) ein Ritchey-Chretien-System bilden, wobei die Beträge der axialen Krümmungsradien Raxial(3) des dritten, sammelnden Spiegels (3) und Raxial (4) des vierten, sammelnden Spiegels (4) substantiell von gleicher Größe sind,

wobei der Abstand zwischen dem Vertex des dritten, sammelnden Spiegels (3) und dem Vertex des vierten, sammelnden Spiegels (4) so eingestellt wird, daß Koma und Astigmatismus im Spiegelsystem, das aus den Spiegeln (1), (2), (3) und (4) gebildet wird, eliminiert werden, wodurch das Spiegelsystem aplanatisch und anastigmatisch wird.

3. Spiegelsystem mit vier Spiegeln (1), (2), (3) und (4), die eine gemeinsame optische Achse aufweisen, wobei in Richtung des Lichteinfalls der erste Spiegel (1) sammelnd, der zweite Spiegel (2) zerstreuend, der dritte Spiegel (3) sammelnd und der vierte Spiegel (4) sammelnd ausgebildet sind, wobei sich der zweite Spiegel (2) zwischen dem Vertex des ersten Spiegels (1) und dessen paraxialen Brennpunkt befindet, wobei nach der Reflexion am zweiten, zerstreuenden Spiegel (2) ein reelles Zwischenbild (5) entsteht, wobei der dritte, sammelnde Spiegel (3) so angeordnet ist, daß sein paraxialer Brennpunkt substantiell mit dem Schnittpunkt von optischer Achse und der Ebene des reellen Zwischenbildes (5) zusammenfallt, wobei einfallendes Parallellicht vom ersten sammelnden Spiegel (1) auf den zweiten, zerstreuenden Spiegel (2) reflektiert wird, der das Licht in die Ebene des Zwischenbildes (5) reflektiert, von wo aus es auf den dritten, sammelnden Spiegel (3) gelangt, der das auf ihn einfallende Licht parallel auf den vierten, sammelnden Spiegel (4) reflektiert, der das auf ihn auftreffende Licht in das Bildfeld (6) reflektiert, in dem ein Detektor (7) einbringbar ist,
**dadurch gekennzeichnet,**
**daß** der erste, sammelnde Spiegel (1) hyperbolisch, der zweite, zerstreuende Spiegel (2) hyperbolisch; der dritte, sammelnde Spiegel (3) substantiell parabolisch und der vierte, sammelnde Spiegel (4) substantiell sphärisch ausgebildet ist,
wobei der Krummungsmittelpunkt des vierten, sammelnden Spiegels (4) substantiell auf dem Schnittpunkt von optischer Achse und der reellen Austrittspupille liegt, die von den vorhergehenden drei Spiegeln (1), (2) und (3) erzeugt wird,
wobei die Schwarzschildkonstante des ersten, sammelnden Spiegels 1 gegeben ist mit:

$$k1 = -1 \ -1 \ /[v * mges^3],$$

wobei mges der Gesamtbrennweitenverlängerungsfaktor ist und sich ergibt mit:
mges = m1 * m2,
wobei m2 den Brennweitenverlängerungsfaktor des Zweispiegelkorrektors aus den Spiegeln 3 und 4 charakterisiert und gegeben ist mit:

$$m2 = |Raxial(4) / Raxial(3)|,$$

wobei v die Vergrößerung des afokalen Teilsystems aus den Spiegeln 1, 2 und 3 ist, die sich ergibt mit:

$$v = m1 * |Raxial(1) /Raxial(3)|,$$

wobei die Schwarzschildkonstante k2 des zweiten, zerstreuenden Spiegels (2) gleich derjenigen des äquivalenten Cassegrainsystems ist und sich ergibt mit:

$$k2 = - [m1 + 1) /(m1 - 1)]^2$$

mit den oben bezeichneten Größen für m1 , ro1 und k(1),
wobei die hyperbolische Formgebung des ersten, sammelnden Spiegels (1) eine sphärische Aberration einführt, die die des vierten, sammelnden Spiegels (4) kompensiert,
wodurch das Spiegelsystem aplanatisch und anastigmatisch wird,
wobei ein reflektierendes oder transmittierendes Plangitter (11) vorzugsweise in die Ebene der reellen Austrittspupille des afokalen Teilsystems, das aus den Spiegeln (1),(2) und (3) gebildet wird, einbringbar ist, wobei ein Spalt(12) in die Ebene des Zwischenbildes (5) einbringbar ist.

4. Spiegelsystem nach einem der Ansprüche 1 bis dadurch gekennzeichnet daß die Krummungsradien der Spiegel (1), (2), (3) und (4) so gewählt werden daß die Petzvalsumme des Spiegelsystems aus den Spiegeln (1), (2), (3) und (4) zu Null wird, wobei durch die Abwesenheit von Astigmatismus ein ebenes Bildfeld (6) erreicht wird, wobei die axialen Krümmungsradien der vier Spiegel (1), (2), (3) und (4) folgender Bedingung genügen;

$$0 = 1 / |Raxial(1)| - 1 /|Raxial(2)| + 1/ |Raxial(3)| + 1 /|Raxial(4)|,$$

**5.** Spiegelsystem nach einem der Ansprüche 1 bis 4, dadurch gekennzeichnet, daß der Lichtweg des Spiegelsystems aus den Spiegeln (1), (2), (3), (4) durch Planspiegel (8) gefaltet ist, wodurch die Spiegel kompakter angeordnet sind, wobei insbesondere einer dieser Planspiegel (8) in die Ebene des reellen Zwischenbildes (5) einbringbar ist.

**6.** Spiegelsystem nach einem der Ansprüche 1 oder 4 oder 5, dadurch gekennzeichnet, daß verschiedene Kombinationen von Spiegeln (3) und (4) über ein Revolversystem wahlweise in den Strahlengang einbringbar sind, wobei insbesondere ein um die optische Achse drehbar gelagerter Planspiegel (8) dazu dient das vom zweiten, zerstreuenden Spiegel (2) kommende Licht in Richtung dieser verschiedenen Kombinationen von Spiegeln (3) und (4) umzulenken. wobei auch dieser Planspiegel (8) als nicht um die optische Achse drehbar ausbildbar ist, wobei nun die verschiedenen Kombinationen aus Spiegeln (3) und (4) um den Planspiegel (8) schwenkbar ausgeführt sind.

**7.** Spiegelsystem nach Anspruch 1 bis 3 oder 5 oder 6 dadurch gekennzeichnet, daß in das Bildfeld (6) des Spiegelsystems eine Bildfeldebnungslinse (9) einbringbar ist, deren Radien so gewählt werden, daß sie die Petzvalsumme des Spiegelsystems aus den Spiegeln (1), (2), (3) und (4) auf Null bringt, sodaß ein ebenes Bildfeld (6) entsteht, wobei sich die Radien der Bildfeldebnungslinse (9) der Brechzahl n bestimmen mit:

$$(n - 1)/n * (1/Rel1 - 1/Rel2) = 2 * [1/|Raxial(1)|$$

$$- 1/|Raxial(2)| + 1/|Raxial(3)| + 1/|Raxial(4)|]$$

wobei Rel1 der Radius der Fläche der Bildfeldebnungslinse (9) ist, die dem vom vierten, sammelnden Spiegel (4) kommenden Licht zugewandt ist und wobei Rel(2) der Radius der Fläche der Bildfeldebnungslinse (9) ist, die der Bildebene (6) zugewandt ist.

**8.** Spiegelsystem nach einem der Ansprüche 1 bis 7, dadurch gekennzeichnet, daß die spiegelnden Flächen der Spiegel (1), (2), (3) und (4) unter Anwendung von asphärischen Termen höherer Ordnung ausbildbar sind, wodurch diese Flachen nicht mehr reine Kegelschnitte darstellen, wobei die Schwarzschildkonstanten dieser Flächen um nicht mehr als 50 Prozent von ihren vorbezeichneten Werten nach Oben und Unten abweichen sollen, wobei für substantiell sphärische Flächen gilt, daß die Schwarzschildkonstanten dieser Flächen zwischen - 0,5 und + 0,5 liegen sollen, wobei die Abstände der Spiegel (1), (2), (3) und (4) um nicht mehr als 25 Prozent von ihren vorbezeichneten Werten abweichen sollen.

**9.** Spiegelsystem nach einem der Ansprüche 1 bis 8, dadurch gekennzeichnet, daß dieses als außeraxiales Spiegelsystem ausgeführt wird, wobei die Spiegel (1), (2), (3), (4) und der Planspiegel (8) sowie die Bildfeldebnungslinse (9) sich als außeraxiale Abschnitte des größeren zur optischen Achse zentrierten Spiegelsystems mit gleichen axialen Krümmungsradien und Abständen der Spiegel (1), (2), (3), (4) sowie des Planspiegels (8) und der Bildfeldebnungslinse (9) rein konstruktiv ergeben, wobei sich die senkrecht zur optischen Achse gerichteten Ausdehnungen der außeraxialen Abschnitte der optischen Flächen der Spiegel (1), (2), (3), (4) und des Planspiegels (8) und der Bildfeldebnungslinse (9) rein konstruktiv ergeben aus dem Strahlengang für ein entsprechend durch das außeraxiale Spiegelsystem abzubildendes Objektfeld.

**10.** Spiegelsystem nach einem der Ansprüche 1 bis 9, dadurch gekennzeichnet, daß die Spiegel (1), (2), (3), (4) und (8) als aktive optische Elemente ausbildbar sind, wobei die Formgebung der Spiegel durch auf der Rückseite des jeweiligen Spiegels angeordnete Stellglieder beeinflußt wird, wodurch atmosphärische Effekte wie auch Fertigungs - und Justierungenauigkeiten der Spiegel kompensiert werden, wobei eine beispielsweise notwendige hyperbolische Formgebung des Spiegels (1) mittels eines ursprünglich parabolisch ausgebildeten Spiegels (1) realisierbar wird.

**11.** Spiegelsystem nach einem der Ansprüche 1 bis 10, dadurch gekennzeichnet, daß vorzugsweise in die Ebene der reellen Austrittspupille, die vom afokalen Teilsystem aus den Spiegeln (1), (2) und (3) gebildet wird, Diaphragmen, polarisierende oder dispergierende optische Elemente, Shutter sowie Filter oder andere die Lichtausbreitung beeiflussende Elemente einbringbar sind.

**Claims**

1. Mirror system with four mirrors (1), (2), (3) and (4), that embody a common optical axis, whereat in the direction of light incidence the first mirror (1) is collecting, the second mirror (2) is dispersing, the third mirror (3) is collecting and the fourth mirror (4) is dispersing shaped, whereat the second mirror (2) is arranged between the vertex and the paraxial focus of the first mirror (1), whereat after the reflection at the second, dispersing mirror (2) a real intermediate image (5) is created, whereat the third collecting mirror (3) is arranged in such a way, that its paraxial focus coincides substantially with the intersection point of the optical axis and the plane of the real intermediate image plane (5), whereat incidenting parallel light is reflected from the first, collecting mirror (1) at the second, dispersing mirror (2), that reflects the light into the plane of the intermediate image plane (5), from where the light reaches the third, collecting mirror (3), that reflects the incidenting light parallel at the fourth, collecting mirror (4), that reflects the incidenting light into the image plane (6), in which a detector (7) may be arranged, **characterized by, that** the first, collecting mirror (1) is parabolical; the second, dispersing mirror (2) is hyperbolical; the third, collecting mirror (3) is hyperbolical and the fourth, collecting mirror (4) is substantially spherical shaped, whereat the central point of curvature of the fourth, collecting mirror (4) lies substantially at the vertex of the third, collecting mirror (3), whereat the spherical aberration of the third, collecting mirror (3) compensates that of the fourth, collecting mirror (4), whereat the hyperbolical shaping of the second, dispersing mirror (2) corresponds to that in a classical Cassegrain system, whereat the Schwarzschild constant k2 of the second, dispersing mirror (2) is given with:

$$k2 = - \left[ (m1 + 1) / (m1 - 1) \right]^2,$$

whereat m1 is the factor of magnification of focal length, that is caused by the second, dispersing mirror (2) and that results with:

$$m1 = ro1 / (ro1 - k(1)),$$

whereat the amount ro1 of the ratio of the axial radii of curvature of the second, dispersing mirror (2) to the axial radius of curvature of the first, collecting mirror (1) is given with

$$ro1 = |Raxial(2) / Raxial(1)|,$$

whereat Raxial(1) is the axial radius of curvature of the first, collecting mirror (1) and whereat Raxial(2) is the axial radius of curvature of the second, dispersing mirror (2),
whereat k(1) is the relative paraxial ray height at the second, dispersing mirror (2) relative to a parallel bundle, that incidents parallel to the optical axis at the first, collecting mirror (1) and that follows with:

$$k(1) = 1 - 2 * a2/|Raxial(1)|,$$

whereat a2 is the positively counted distance between the vertex of the first, collecting mirror (1) to the vertex of the second, dispersing mirror (2), whereat the Schwarzschild constant k3 of the third, collecting mirror (3) is substantially given with:

$$k3 = -1 - |Raxial(3) / Raxial(4)|^3,$$

whereat Raxial(3) denotes the axial radius of curvature of the third, collecting mirror (3) and whereat Raxial(4) denotes the axial radius of curvature of the fourth, collecting mirror (4), as a result of which the mirror system becomes aplanatic and anastigmatic.

2. Mirror system with four mirrors (1), (2), (3) and (4), that embody a common optical axis, whereat in the direction of light incidence the first mirror (1) is collecting, the second mirror (2) is dispersing, the third mirror (3) is collecting and the fourth mirror (4) is dispersing shaped, whereat the second mirror (2) is arranged between the vertex and the paraxial focus of the first mirror (1), whereat after the reflection at the second, dispersing mirror (2) a real intermediate image (5) is created, whereat the third collecting mirror (3) is arranged in such a way, that its paraxial focus coincides substantially with the intersection point of the optical axis and the plane of the real intermediate image plane (5), whereat incidenting parallel light is reflected from the first, collecting mirror (1) at the second, dispersing mirror (2), that reflects the light into the plane of the intermediate image plane (5), from where the light reaches the third, collecting mirror (3), that reflects the incidenting light parallel at the fourth, collecting mirror (4), that reflects the incidenting light into the image plane (6), in which a detector (7) may be arranged,

**characterized by**,

**that** the first, collecting mirror (1) is hyperbolical, the second, dispersing mirror (2) is hyperbolical; the third, collecting mirror (3) and the fourth, collecting mirror (4) are substantially parabolical shaped,

whereat the first, collecting mirror (1) and the second dispersing mirror (2) form a Ritchey-Chretien system, whereat the amounts of the axial radii of curvature Raxial(3) of the third, collecting mirror (3) and Raxial(4) of the fourth, collecting mirror (4) substantially coincide,

whereat the distance between the vertex of the third, collecting mirror (3) and the vertex of the fourth, collecting mirror (4) becomes chosen in such a way, that in the mirror system out of the mirrors (1), (2), (3) and (4) coma and astigmatism become eliminated, as a result of which the mirror system becomes aplanatic and anastigmatic.

3. Mirror system with four mirrors (1), (2), (3) and (4), that embody a common optical axis, whereat in the direction of light incidence the first mirror (1) is collecting, the second mirror (2) is dispersing, the third mirror (3) is collecting and the fourth mirror (4) is dispersing shaped, whereat the second mirror (2) is arranged between the vertex and the paraxial focus of the first mirror (1), whereat after the reflection at the second, dispersing mirror (2) a real intermediate image (5) is created, whereat the third collecting mirror (3) is arranged in such a way, that its paraxial focus coincides substantially with the intersection point of the optical axis and the plane of the real intermediate image plane (5), whereat incidenting parallel light is reflected from the first, collecting mirror (1) at the second, dispersing mirror (2), that reflects the light into the plane of the intermediate image plane (5), from where the light reaches the third, collecting mirror (3), that reflects the incidenting light parallel at the fourth, collecting mirror (4), that reflects the incidenting light into the image plane (6), in which a detector (7) may be arranged,

**characterized by,**

**that** the first, collecting mirror (1) is hyperbolical; the second dispersing mirror (2) is hyperbolical; the third collecting mirror (3) is substantially parabolical and the fourth, collecting mirror (4) is substantially spherical shaped,

whereat the center point of curvature of the fourth, collecting mirror (4) lies substantially at the intersection point of the optical axis and the real exit pupil, that is formed by the preceding three mirrors (1), (2) and (3), whereat the Schwarzschild constant of the first, collecting mirror 1 is given with:

$$k1 = -1 - 1 \ [v * mges^3],$$

whereat mges is the factor of magnification of focal length, that is given with:

$$mges = m1 * m2 \ ,$$

whereat m2 characterizes the factor of magnification of focal length of the two-mirror corrector out of the mirrors 3 and 4, that is given with:

$$m2 = |Raxial(4) \ / \ Raxial(3)|,$$

whereat v is the magnification of focal length of the afocal part system out of the mirrors 1, 2 and 3, that is given with:

$$v = m1 * |Raxial(1) \ / \ Raxial(3)|,$$

whereat the Schwarzschild constant of the second, dispersing mirror (2) is equal to that of the equivalent Cassegrain system and is given with:

$$k2 = - \ [(m1 + 1) \ / \ (m1 - 1)]^2$$

with the above defined quantities for m1, ro1 and k(1),

whereat the hyperbolical shaping of the first, collecting mirror (1) introduces a spherical aberration, that compensates that of the fourth, collecting mirror (4), as a result of which the mirror system becomes aplanatic and anastigmatic, whereat a reflecting or transmitting grating (11) may be arranged preferably into the plane of the real exit pupil of the afocal part system, that is formed out of the mirrors (1), (2) and (3), whereat a slit (12) may be arranged into the plane of the intermediate image (5).

4. Mirror system according to one of the claims 1 to 3, by this means characterized, that the radii of curvature of the mirrors (1), (2), (3) and (4) are chosen in such a way, that the Petzval-sum of the mirror system out of the mirrors (1), (2), (3) and (4) becomes zero, whereat in absence of astigmatism a flat image plane (6) is obtained, whereat the axial radii of curvature of the four mirrors (1), (2), (3) and (4) satisfy the following condition:

$$0 = 1 / |Raxial(1)| - 1 / |Raxial(2)| + 1 / |Raxial(3)| + 1 / |Raxial(4)|.$$

5. Mirror system according to one of the claims 1 to 4, by this means characterized, that the way of light of the mirror system out of the mirrors (1), (2), (3) and (4) is folded by means of flat mirrors, as a result of which the mirrors are arranged more compact, whereat especially one of these flat mirrors (8) may be brought into the plane of the real intermediate image (5).

6. Mirror system according to one of the claims 1 to 5, by this means characterized, that different combinations of mirrors (3) and (4) may be brought as one chooses into the way of light with a revolver-like system, whereat especially a flat mirror (8), that is mounted rotatable around the optical axis, serves to direct light, that comes from the second, dispersing mirror (2) into the direction of these different combinations of mirrors (3) and (4), whereat that flat mirror (8) may be carried out also as not rotatable around the optical axis, whereat different combinations of mirrors (3) and (4) become carried out as rotatable around the flat mirror (8).

7. Mirror system according to claims 1 to 3 or 8 or 6, by this means characterized, that into the image field (6) an image field flattening lens (9) may be brought in, those radii of curvature are chosen in such a way, that the Petzval-sum of the mirror system out of the mirrors (1), (2), (3) and (4) becomes zero, as a result of which a flat image field (6) arises, whereat the radii of curvature of the image field flattening lens (9) with the refraction number n result with:

$$(n - 1)/n * (1/Rel1 - 1/Rel2) = 2 * [1/|Raxial(1)|$$

$$- 1/|Raxial(2)| + 1/|Raxial(3)| + 1/|Raxial(4)|],$$

whereat Rel1 is the radius of curvature of that surface of the image field flattening lens (9), that faces the light, that comes from the fourth, collecting mirror (4) and whereat Rel2 is the radius of curvature of that surface of the image field flattening lens (9), that faces the image plane (6).

8. Mirror system according to one of the claims 1 to 7, by this means characterized, that the reflecting surfaces of the mirrors (1), (2), (3) and (4) may be carried out under application of aspherical contributions of higher order, as a result of which these surfaces are no longer pure conics, whereat the Schwarzschild constants of these surfaces should not deviate more than 50 percent from its given values towards to the top and towards to the bottom, whereat for substantially spherical surfaces is valid, that the Schwarzschild constants of that surfaces shall lie between -0,5 and 0,5, whereat the distances of the mirrors (1), (2), (3) and (4) shall deviate not more than 25 percent from its values given above.

9. Mirror system according to one of the claims 1 to 8, by this means characterized, that it's arranged as an out of axis mirror system, whereat the mirrors (1), (2), (3) and (4) and the flat mirror (8), as well as the image field flattening lens (9), result as out of axis segments of the larger, to the optical axis centered mirror system with same axial radii of curvature and distances of the mirrors (1), (2), (3) and (4), as well as of the flat mirror (8) and the image field flattening lens (9), whereat in perpendicular direction to the optical axis the extents of the out of axis segments of the optical surfaces of the mirrors (1), (2), (3) and (4) and of the flat mirror (8) and of the image field flattening lens (9) result purely constructive out of the trace of rays for that object field, that shall be imaged by the out of axis mirror system.

10. Mirror system according to one of the claims 1 to 9, by this means characterized, that the mirrors (1), (2), (3), (4) and (8) may be created as active optical elements, whereat the shaping of the mirrors is influenced by adjustment elements, that are arranged at the back of the particular mirror, as a result of which atmospherical effects as well as production - and adjustment inaccuracies of the mirrors become compensated, whereat for instance a necessary hyperbolical shaping of mirror (1) becomes realizable by means of an originally parabolical shaped mirror (1).

11. Mirror system according to one of the claims 1 to 10, by this means characterized, that diaphragms, polarizing or dispersing optical elements, shutter as well as filter or other optical elements, that influence the light movement, may be brought preferably into the plane of the real exit pupil, that is created from the afocal part system out of the mirrors (1), (2) and (3).

### Revendications

1. Système de miroir avec quatre miroiter (1), (2 ), (3) et (4), comporter l'une commune axe optique, à l'occasion de quoi vers direction de l'incidente de lumière le premier miroir (1) collectes, de la deuxième miroir (2) distraire, de la tierce miroir (3) collectes et de la quatrième miroir (4) collectes sont éduquée, à l'occasion de quoi se la deuxième miroir (2) entre les vertex du premier miroir (1) et dont paraxial foyer trouver, a l'occasion de quoi après le réflexion à la deuxième, dispersion miroir (2) un loyale d'image intermédiaire (5) résulter, à l'occasion de quoi les trois, collectes miroir (3) ainsi est arrangé, qu'être paraxial foyer substantiel avec l'intersection d'optique axe et les niveaux de loyale image intermédiaire (5) tomber ensemble, à l'occasion de quoi parallèle lumière incidente du premier collectes miroir (1) sur la deuxième, dispersion miroir (2) deviens reflété, cet la lumière dans les niveaux d'image intermédiaire (5) reflété, de où de il sur les tiers, collectes miroir (3) parvenue, les quartées cet sur lui incidente lumière parallèle sur cet, collectes miroir (4) reflété, lequel sur lui rencontrée sur lumière en l'écran (6 ) reflété, dans le un détecteur (7) devenir peut arrangé, **par là marqué,**
**que** le premier collectes miroir (1) parabolique; la deuxième, dispersion miroir (2) hyperbolique; les trois, collectes miroir (3) hyperbolique et la quatrième, collectes miroir (4) substantiel sphérique est éduquée, à l'occasion de quoi le centre de courbe des quartées, collectes miroir (4) substantiel sur les vertex des tiers, collectes miroir (3) gît, à l'occasion de quoi les sphériques aberration des tiers, collectes miroir (3) cet des quartées, collectes miroir 4 compensé, à l'occasion de quoi l'hyperbolique forme de la deuxième, dispersion miroir (2) correspond au a un système de Cassegrain classiques, à l'occasion de quoi le Schwarzschild constant k2 de la deuxième, dispersion miroir (2) donner est par:

$$k2 = - [(m1 + 1 )] / (m1 - 1 )]^2,$$

à l'occasion de quoi ml cela distances focale facteur de prorogation, le par la deuxième, dispersion miroir (2) produire de sera et s'avère :

$$m1 = ro1 / (ro1 - k (1)),$$

à l'occasion de quoi ro1 la somme de la réalisation d'axial rayon de courbe de la deuxième, dispersion miroir (2) aux axial rayon de courbure du premier, collectes miroir (1) est avec: ro1 = IRaxial (2) / Raxial (1)I
à l'occasion de quoi Raxial (1) d'axial rayon de courbure du premier, collectes miroir (1) est et à l'occasion de quoi Raxial (2) d'axial rayon de courbure de la deuxième, dispersion miroir (2) est, à l'occasion de quoi k(1) le relatif, paraxial hauteur incidente sur la deuxième, dispersion miroir (2) référant d'un balluchon parallèles lumière est, que parallèle à l'axe optiques sur le premier, collectes miroir (1) toucher et se à ceci fera: k (1) = 1 - 2*a2 / IRaxial (1)I, à l'occasion de quoi a2 la positive comptée distance entre les vertex du premier, collectes miroir (1) aux vertex de la deuxième, dispersion miroir (2) est, à l'occasion de quoi le Schwarzschild constante k3 des tiers, collectes miroir (3) substantiel donner est par: k3 = -1 - IRaxial (3) / Raxial (4)I³,
à l'occasion de quoi Raxial (3) d'axial rayon de courbure des tiers, collectes miroir (3 ) est et à l'occasion de quoi Raxial (4) d'axial rayon de courbure des quartées, collectes miroir (4 ) est, par où aplanatique la système de miroir et deviens anastigmatique.

2. Système de miroir avec quatre miroiter (1), (2), (3) et (4), comporter l'une commune axe optique, à l'occasion de quoi vers direction de l'incidente de lumière le premier miroir (1) collectes, de la deuxième miroir (2) distraire, de la tierce miroir (3) collectes et de la quatrième miroir (4) collectes sont éduquée, à l'occasion de quoi se la deuxième

EP 0 801 758 B1

miroir (2) entre les vertex du premier miroir (1) et dont paraxial foyer trouver, à l'occasion de quoi après le réflexion à la deuxième, dispersion miroir (2) un loyale d'image intermédiaire (5) deviendra, à l'occasion de quoi les trois, collectes miroir (3) ainsi est arrangé, qu'être paraxial foyer substantiel avec l'intersection d'optique axe et les niveaux de loyale image intermédiaire (5) tomber ensemble, à l'occasion de quoi incidente parallèle lumière du premier collectes miroir (1) sur la deuxième, dispersion miroir (2) deviens reflété, cet la lumière dans les niveaux d'image intermédiaire (5) reflété, où de il sur les tiers, collectes miroir 3 parvenue, les quartées cet sur lui incidente lumière parallèle sur cet, collectes miroir 4 reflété, lequel sur lui rencontrée sur lumière en l'écran (6) reflété, dans le un détecteur (7) devenir peut arrangé, **par là marqué, que** le premier, collectes miroir (1) hyperbolique; la deuxième, dispersion miroir 2 hyperbolique; les trois, collectes miroir (3) et la quatrième collectes miroir (4) substantiel parabolique sont éduquée, à l'occasion de quoi le premier, collectes miroir (1) et la deuxième, dispersion miroir (2) un Ritchey-Chrétien - système constituer, à l'occasion de quoi les montants l'axial courbe de rayon du Raxial (3) des tiers, collectes miroir (3) et du Raxial (4) des quartées, collectes miroir substantiel de grandeur même sont, à l'occasion de quoi la distance entre les vertex des tiers, collectes miroir (3) et les vertex des quartées, collectes miroir (4) deviens ainsi clôt, que coma et astigmatism dans la système de miroir, cet des miroiter (1), (2), (3) et (4) deviens lettré, devenir éliminé, par où aplanatique la système de miroir et deviens anastigmatique.

3. Système de miroir avec quatre miroiter (1), (2), (3) et (4), comporter l'une commune axe optique, à l'occasion de quoi vers direction de l'incidente de lumière le premier miroir (1) collectes, de la deuxième miroir (2) distraire, de la tierce miroir (3) collectes et de la quatrième miroir (4) collectes sont éduquée, à l'occasion de quoi se la deuxième miroir (2) entre les vertex du premier miroir (1) et dont paraxial foyer trouver, à l'occasion de quoi après le réflexion à la deuxième, dispersion miroir (2) un loyale d'image intermédiaire résulté, à l'occasion de quoi les trois, collectes miroir (3) ainsi est arrangé, qu'être paraxial foyer substantiel avec l'intersection d'optique axe et les niveaux de loyale image intermédiaire (5) tomber ensemble, à l'occasion de quoi incidente parallèle lumière du premier collectes miroir (1) sur la deuxième, dispersion miroir (2) deviens reflété, cet la lumière dans les niveaux d'image intermédiaire (5) reflété, de où de il sur les tiers, collectes miroir (3) parvenue, lequel sur lui rencontrée sur lumière en l'écran (6) reflété, dans le un détecteur (7) devenir peut arrangé, **par là marqué, que** le premier collectes miroir (1) hyperbolique; la deuxième, dispersion miroir (2 ) hyperbolique; les trois, collectes miroir (3) substantiel parabolique et la quatrième, collectes miroir (4) substantiel sphérique est éduquée, à l'occasion de quoi le centre de courbe des quartées, collectes miroir (4) substantiel sur l'intersection d'optique axe et gît le pupille de sortie loyale, quelle deviens génèré des antécédentes trois miroiter (1), (2) et (3), à l'occasion de quoi le Schwarzschild constant du premier, avec collectes miroir 1 est donner:

$$k1 = -1 -1/[v *mges^3],$$

à l'occasion de quoi mges le facteur de la prorogation du focal l'ensemble est et s'avère avec:

$$mges = m1 * m2,$$

à l'occasion de quoi m2 le facteur de la prorogation du focale du miroir de deux-correcteur des miroiter 3 et 4 avec caractérisé et est donner:

$$m2 = |Raxial (1)/Raxial (3)|,$$

à l'occasion de quoi v l'extension de la pas focale système partiel des miroiter (1), (2) et (3) est, qui fera avec:

$$v = m1 * |Raxial (1) / Raxial (3)|,$$

à l'occasion de quoi le Schwarzschild - constante k2 de la deuxième, dispersion miroir (2) tout de suite celle d'équivalent Cassegrain - système est et s'avère avec:

$$k2 = [(m1 + 1)/(m1 - 1)]^2,$$

avec les dessus quantités qualifiés pour m1, ro1 et k (1), à l'occasion de quoi l'hyperbolique forme du premier,

24

collectes miroir (1) génèré une aberration sphériques, quelle quartées cet, collectes miroir (4) compensé, par où aplanatique la système de miroir et deviens anastigmatique, à l'occasion de quoi un réfléchissants, ou transmission treillis de plan (11) de préférence dans les niveaux le loyale pupille de sortie de la non focal système partiel, cet des miroiter (1), (2) et (3 ) deviens lettré, devenir peut arrangé, à l'occasion de quoi une crevasse (12) dans les niveaux d'image intermédiaire (5) devenir peut arrangé.

4. Système de miroir après un les revendications 1 jusque 3, **par là marqué, que** la courbe des rayons du miroir (1), (2), (3) et (4) devenir ainsi sélectionné, que la somme de Petzval de la système de miroir des miroiter (1), (2), (3) et (4) deviens à zéro, à l'occasion de quoi par l'absence d'astigmatisme un égale écran (6) deviens atteint, à l'occasion de quoi l'axial courbe des rayons le quatre miroir (1), (2), (3) et (4) suivant condition suffire:

$$0 = 1/|Raxial(1)|- 1 / |Raxial (2)| + 1 / |Raxial (3)| + 1/|Raxial (4)|,$$

5. Système de miroir après un les revendications 1 jusque 4, **par là marqué, que** la voie de lumière de la système de miroir des miroiter (1), (2), (3), (4) par miroir de plan (8) est froncée, par où le miroir compact sont arrangé, à l'occasion de quoi notamment un ce miroir de plan (8) dans les niveaux de loyale image intermédiaire (5) devenir peut arrangé.

6. Système de miroir après un les revendications 1 ou 4 ou 5, **par là marqué, que** différente combinaisons de miroiter (3) et (4) sur une système de revolver sage élection dans la veine de radiant devenir rentré, à l'occasion de quoi notamment un pour le axe optique mobile gîté miroir de plan (8) à cela cet la deuxième, dispersion miroir (2) à venir lumière vers direction ces différentes combinaisons de miroiter (3) et (4) détourner, à l'occasion de quoi aussi ce miroir de plan (8) que pas pour cet optique axe mobile devenir exécuté, à l'occasion de quoi maintenant les différentes combinaisons de miroiter (3) et (4) pour le miroir de plan (8) orientable sont exécuté.

7. Système de miroir après revendication 1 jusque 3 ou 5, ou 6 **par là marqué, que** en écran (6) de la système de miroir un lentille (9) à la plaine écran (6) devenir peut rentré, dont devenir rayons ainsi sélectionné, qu'elle la somme de Petzval de la système de miroir des miroiter (1), (2), (3) et (4) fermé zéro, tel que un égale écran (6 ) deviendra, à l'occasion de quoi se les rayons du lentille (9) la nombre de réfraction n cogérer:

$$(n-1)/n*(1/Re1-1/Re2)=2*[1/|Raxial(1)$$

$$-1/|Raxial(2)|+1/|Raxial(3)|+ 1/|Raxial(2)|],$$

à l'occasion de quoi Re1 du rayon de courbure de la superficie du cristallin (9) est, les quartées de la, collectes miroir (4) futures lumière est adroit à et à l'occasion de quoi Re1 (2 ) le rayon de courbure de la superficie du cristallin (9) est, qui les niveaux d'image (6) est adroit à.

8. Système de miroir après un les revendications 1 jusque 7, **par là marqué, que** la comme un miroir superficies du miroir (1), (2), (3) et (4) sous inclusion de pas des contributions sphériques supérieur discipline devenir devoir proportionné, par où ces superficies poser ne plus pure section conique, à l'occasion de quoi le Schwarzschild constante ces superficies pour ne plus que 50 pour-cent des leurs qualifiés avant valoir en haut ou bas devoir dévier, à l'occasion de quoi pour substantiel sphériques superficies vaut, qu'entre le Schwarzschild constante ces superficies -0,5 et +0,5 gésir devoir, à l'occasion de quoi les distances du miroir (1), (2), (3) et (4) pour ne plus que 25 pour-cent des leurs devoir dévier qualifiés avant valoir.

9. Système de miroir après un les revendications 1 jusque 8, **par là marqué, que** cette que pas deviens exécuté axial système de miroir, à l'occasion de quoi le miroir (1), (2), (3) et (4) et le miroir de plan (8) ainsi que le cristallin (9) se ne qu'axiales sections de la grandir, aux optiques axe centristes système de miroir avec égaler axial courbe des quartées et espacements du miroir (1), (2), (3), (4) ainsi que du miroir de plan (8) et le cristallin (9) blanc par la construction de la veine de radiant pour une conforme par le pas axial système de miroir engendrer à sur portante terre d'objet.

10. Système de miroir après un les revendications 1 jusque 9, **par là marqué, que** le miroir (1), (2), (3) et (4) qu'active optique éléments devenir devoir exécuté, à l'occasion de quoi la forme du miroir affecté par sur les deviens page verso des respectifs miroir arrangée transmetteur, par où atmosphériques effet comme aussi inexactitudes de la fabrication et compensé le devenir orientation du miroir, à l'occasion de quoi une sage exemple nécessaires hyperbolique forme du miroir (1) moyennant d'une primordial parabolique formées miroir (1) deviens réalisable.

11. Système de miroir après un les revendications 1 jusque 10, **par là marqué, que** de préférence dans les niveaux le loyale pupille de sortie, de la non focal système de partie des miroiter (1), (2) et (3) deviens lettré, éblouir, polariser ou dispersion optique éléments, briseur de sous, ainsi que filtre, ou autrui la diffusion de lumière influencer éléments devenir devoir arrangé.

Fig.1

3D LAYOUT

SPECTR3
MON JUN 13 1994

Fig.2

Fig.3

OBJ: 0.00 DEG

8.05

IMA: 0.000 MM

OBJ: 0.20 DEG

IMA: -52.346 MM

OBJ: 0.40 DEG

IMA: -104.610 MM

SPOT DIAGRAM

AUSFUHRUNGSBEISPIEL 1
MON JUN 13 1994   UNITS ARE MICRONS.
FIELD        :      1        2        3
RMS RADIUS :     0.71     0.53     2.20
GEO RADIUS :     1.02     0.91     3.40
AIRY DISK  :     4.026            REFERENCE   : MIDDLE

AUSFUHRUNGSBEISPIEL 1
TUE MAR 01 1994
0.5500 MICRONS AT 0.40 DEG.
PEAK TO VALLEY IS 0.1518 WAVES.

WAVEFRONT FUNCTION

Fig.4

Fig. 5

EP 0 801 758 B1

Fig.6

Fig.7

Fig.8

Fig.9

Fig.10

WAVEFRONT FUNCTION

AUSFÜHRUNGSBEISPIEL 4
TUE MAR 01 1994
0.5500 MICRONS AT 0.10 DEG.
PEAK TO VALLEY IS 0.0052 WAVES.

Fig.11

Fig.12

Fig.13

OBJ: 0.00 DEG

15.03

IMA: 0.000 MM

OBJ: 0.10 DEG

IMA: -26.058 MM

OBJ: 0.20 DEG

IMA: -52.136 MM

OBJ: 0.30 DEG

IMA: -78.255 MM

OBJ: 0.40 DEG

IMA: -104.439 MM

SPOT DIAGRAM

AUSFÜHRUNGSBEISPIEL 6
WED MAR 02 1994    UNITS ARE MICRONS.

| FIELD | : | 1 | 2 | 3 | 4 | 5 |
|---|---|---|---|---|---|---|
| RMS RADIUS | : | 2.13 | 2.71 | 3.71 | 3.21 | 4.21 |
| GEO RADIUS | : | 3.36 | 4.80 | 5.92 | 5.21 | 7.52 |
| AIRY DISK | : | 4.007 | | REFERENCE | : MIDDLE | |

Fig.14

EP 0 801 758 B1

OBJ: 0.00, 0.00 DEG

5.87

IMA: 0.000, 299.998 MM

OBJ: 0.20, 0.00 DEG

IMA: -52.354, 300.027 MM

OBJ: 0.40, 0.00 DEG

IMA: -104.682, 300.115 MM

SPOT DIAGRAM

AUSFUHRUNGSBEISPIEL 7
MON JUN 13 1994   UNITS ARE MICRONS.
FIELD        :      1       2       3
RMS RADIUS :    1.07    1.32    1.46
GEO RADIUS :    2.86    2.70    2.88
AIRY DISK  :    2.933          REFERENCE   : MIDDLE

Fig.15

EP 0 801 758 B1

SPOT DIAGRAM

AUSFUHRUNGSBEISPIEL 7
MON JUN 13 1994    UNITS ARE MICRONS.
FIELD        :        1        2        3
RMS RADIUS :     1.46     1.60     1.34
GEO RADIUS :     4.52     4.37     3.32
AIRY DISK  :     4.038            REFERENCE   : MIDDLE

Fig.16

EP 0 801 758 B1

42

Fig.17